(19) **Europäisches Patentamt / European Patent Office / Office européen des brevets**

(11) **EP 4 082 193 B1**

(12) # EUROPEAN PATENT SPECIFICATION

(45) Date of publication and mention
of the grant of the patent:
**14.02.2024 Bulletin 2024/07**

(21) Application number: **20908963.0**

(22) Date of filing: **17.12.2020**

(51) International Patent Classification (IPC):
$H04N\ 19/117^{(2014.01)}$        $H04N\ 19/157^{(2014.01)}$
$H04N\ 19/176^{(2014.01)}$        $H04N\ 19/593^{(2014.01)}$

(52) Cooperative Patent Classification (CPC):
**H04N 19/157; H04N 19/117; H04N 19/176;
H04N 19/593**

(86) International application number:
**PCT/CN2020/137032**

(87) International publication number:
**WO 2021/135954 (08.07.2021 Gazette 2021/27)**

(54) **AN ENCODER, A DECODER AND CORRESPONDING METHODS OF SYMMETRIC MODE DEPENDENT INTRA SMOOTHING FOR NON-SQUARE BLOCKS**

KODIERER, DEKODIERER UND ENTSPRECHENDES VERFAHREN FÜR SYMMETRISCHE MODUSABHÄNGIGE INTRAGLÄTTUNG FÜR NICHT-QUADRATISCHE BLÖCKE

CODEUR, DÉCODEUR ET PROCÉDÉS CORRESPONDANTS DE LISSAGE INTRA DÉPENDANT DU MODE SYMÉTRIQUE POUR DES BLOCS NON CARRÉS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.01.2020 PCT/CN2020/070140**

(43) Date of publication of application:
**02.11.2022 Bulletin 2022/44**

(73) Proprietor: **Huawei Technologies Co., Ltd.
Shenzhen, Guangdong 518129 (CN)**

(72) Inventors:
• **WANG, Biao**
  **Shenzhen, Guangdong 518129 (CN)**
• **ESENLIK, Semih**
  **Shenzhen, Guangdong 518129 (CN)**
• **KOTRA, Anand Meher**
  **Shenzhen, Guangdong 518129 (CN)**
• **GAO, Han**
  **Shenzhen, Guangdong 518129 (CN)**
• **ALSHINA, Elena Alexandrovna**
  **Shenzhen, Guangdong 518129 (CN)**

(74) Representative: **Grünecker Patent- und
Rechtsanwälte
PartG mbB
Leopoldstraße 4
80802 München (DE)**

(56) References cited:
CN-A- 107 736 023        CN-A- 107 750 457
CN-A- 107 771 393        CN-A- 110 393 010
US-A1- 2018 176 601

• **BENJAMIN BROSS ET AL: "Versatile Video Coding (Draft 7)", 16. JVET MEETING; 20191001 - 20191011; GENEVA; (THE JOINT VIDEO EXPLORATION TEAM OF ISO/IEC JTC1/SC29/WG11 AND ITU-T SG.16 ), , no. JVET-P2001-vE; JVET-P2001 ; m51515 14 November 2019 (2019-11-14), pages 1-489, XP030224330, Retrieved from the Internet: URL:http://phenix.int-evry.fr/jvet/doc_end _user/documents/16_Geneva/wg11/JVET-P2001 - v14.zip JVET-P2001-vE.docx [retrieved on 2019-11-14]**

- **FILIPPOV (HUAWEI) A ET AL: "On modifications of intra prediction process", 17. JVET MEETING; 20200107 - 20200117; BRUSSELS; (THE JOINT VIDEO EXPLORATION TEAM OF ISO/IEC JTC1/SC29/WG11 AND ITU-T SG.16 ), , no. JVET-Q0464 ; m52060 10 January 2020 (2020-01-10), XP030223610, Retrieved from the Internet: URL:http://phenix.int-evry.fr/jvet/doc_end _user/documents/17_Brussels/wg11/JVET-Q046 4-v3.zip JVET-Q0464-v3.docx [retrieved on 2020-01-10]**

**Description**

TECHNICAL FIELD

Embodiments of the present application (disclosure) generally relate to the field of picture processing and more particularly to symmetric mode dependent intra smoothing for non-square blocks.

BACKGROUND

Video coding (video encoding and decoding) is used in a wide range of digital video applications, for example broadcast digital TV, video transmission over internet and mobile networks, real-time conversational applications such as video chat, video conferencing, DVD and Blu-ray discs, video content acquisition and editing systems, and camcorders of security applications.

The amount of video data needed to depict even a relatively short video can be substantial, which may result in difficulties when the data is to be streamed or otherwise communicated across a communications network with limited bandwidth capacity. Thus, video data is generally compressed before being communicated across modem day telecommunications networks. The size of a video could also be an issue when the video is stored on a storage device because memory resources may be limited. Video compression devices often use software and/or hardware at the source to code the video data prior to transmission or storage, thereby decreasing the quantity of data needed to represent digital video images. The compressed data is then received at the destination by a video decompression device that decodes the video data. With limited network resources and ever increasing demands of higher video quality, improved compression and decompression techniques that improve compression ratio with little to no sacrifice in picture quality are desirable.

BENJAMIN BROSS ET AL, "Versatile Video Coding (Draft 7)", no. JVET-P2001-vE; JVET-P2001 ; m51515, (20191114), pages 1 - 489, 16. JVET MEETING; 20191001 - 20191011; GENEVA; (THE JOINT VIDEO EXPLORATION TEAM OF ISO/IEC JTC1/SC29/WG11 AND ITU-T SG.16 ), URL: http://phenix.intevry.fr/jvet/doc_end_user/documents/16_Geneva/wg11/JVET-P2001-v14.zip JVET-P2001-vE.docx, (20191114) present the VVC standard according to Draft 7 that, particularly, defines a mode dependent interpolation filtering technique.

Particularly, in the context of intra prediction of non-square blocks based on angular intra prediction modes and, more particularly, wide angle intra prediction used for non-square blocks, a problem with respect to asymmetric interpolation filtering arises.

SUMMARY

Embodiments of the present application provide apparatuses and methods for encoding and decoding.

The foregoing and other objects are achieved by the subject matter of the independent claims. Further implementation forms are apparent from the dependent claims, the description and the figures.

According to an aspect of the disclosure it is provided a method of mode (for example, an angular or wide-angle intra prediction mode) dependent interpolation filtering (intra smoothing) of a current transform block to be performed in the context of an intra prediction process. The method comprises the following steps: obtaining a threshold value based on a width of the current transform block and a height of the current transform block; obtaining a variable of corner mode based on the width of the current transform block and the height of the current transform block; obtaining a variable of mode difference based on the variable of corner mode; comparing the variable of mode difference with the threshold value to obtain a comparison result; obtaining a filter flag (value) based on the comparison result, wherein the filter flag (value) indicates a type of an interpolation filter to be used for the interpolation filtering; and performing interpolation filtering of the current transform block by means of the interpolation filter indicated by the obtained filter flag. The variable of corner mode is obtained based on $Log2(nTbW/nTbH)$ and an offset value, wherein nThW and nTbH represent the width and height of the current transform block, respectively;

the variable of mode difference is set equal to: $predModeIntra>cornerMode?Abs( predModeIntra - \text{value of vertical mode} ): Abs( predModeIntra - \text{value of horizontal mode})$, wherein cornerMode represents the variable of corner mode, and predModeIntra represents an intra prediction mode of the current transform block; the threshold value, intraHorVerDistThres, is obtained by:

| | nTbS = 2 | nTbS = 3 | nTbS = 4 | nTbS = 5 | nTbS = 6 | nTbS = 7 |
|---|---|---|---|---|---|---|
| intraHorVerDistThres[ nTbS ] | 24 | 14 | 2 | 0 | 0 | 0 |

wherein the variable nTbS is set equal to $( Log2 ( nTbW) + Log2 (nTbH)) >> 1$, and nTbW and nTbH represent the width and height of the current transform block, respectively; the filter flag is obtained as follows:

If minDistVerHor is greater than intraHorVerDistThres[nTbS], filterFlag is set equal to 1;
otherwise, filterFlag is set equal to 0; wherein minDistVerHor represents the variable of mode difference, and filterFlag represents the filter flag; and the obtained filter flag indicates a Gaussian interpolation filter to be used for the interpolation filtering when the variable of mode difference is greater than the threshold value and indicates a cubic interpolation filter to be used for the interpolation filtering when the variable of mode difference is smaller than or equal to the threshold value.

In the conventional method, a problem with respect to asymmetric interpolation filtering (for example, interpolation filtering using different kinds of interpolations filters for angular modes that are asymmetric with respect to a reference intra prediction mode) arises. Thus, it is an object addressed by the present application to provide for interpolation techniques in the context of intra prediction that can guarantee symmetric interpolation filtering with respect to the reference intra prediction mode. By the thus specified method it can be guaranteed that for non-square blocks in the context of intra prediction the same interpolation filters are used for intra prediction modes, particularly, wide-angle modes, that are symmetric with respect to a reference intra prediction mode (for example, a horizontal intra prediction mode, or a vertical intra prediction mode, the value of horizontal mode is 18 and the value of the vertical mode is 50). Thereby, intra smoothing caused by the application of the interpolation filter increases the resulting quality of the decoded and displayed picture as compared to the art. Particularly, simulation test runs have proven that performance gain may be obtained by the symmetric interpolation filtering.

Particularly, the offset value may be 4 and the variable of corner mode, cornerMode, can be obtained by:

| Log2(nTbW/nTbH) +4 | 0 | 1 | 2 | 3 | 4 | 5 | 6 | 7 | 8 |
|---|---|---|---|---|---|---|---|---|---|
| cornerMode | 48 | 46 | 44 | 40 | 34 | 28 | 24 | 22 | 20 |

Thereby, smooth adaptation of previous standardized processing to the method can be achieved.

Particularly, Log2(nTbW/nTbH) + 4 can be restricted to be non-negative for coding efficiency and definite processing behavior.

It has to be noted that the corner mode depends on the aspect ratio of the current transform block. For example, when the current transform block is a square block, the corresponding corner mode may be 34. When nTbW/nTbH = 1/2, the corresponding corner mode may be 40. Since the dependence of the corner mode on the aspect ratio of the current transform block is taken into account, symmetric interpolation filtering with respect to the reference intra prediction mode (for example, a horizontal intra prediction mode, or a vertical intra prediction mode) can be achieved.

The cited equation for the variable of mode difference (see above) represents an exemplary concrete mathematical realization of the dependence of the variable of mode difference on the corner mode of the current transform block that allows for the symmetric interpolation filtering.

In all of the above-described embodiments interpolation filtering of the current transform block by means of the interpolation filter indicated by the obtained filter flag can be performed and intra prediction can be performed by using a selected intra prediction mode.

Further, it is provided an encoder and a decoder comprising processing circuitry for carrying out the method according to any one of the above-described embodiments.

Further, it is provided a computer program product comprising a program code for performing the method according to any of the above-described embodiments.

All of the above-described methods can be implemented in the encoding or decoding devices described below and these devices can be configured to carry out the procedural steps of that methods with the same advantages as discussed above.

Details of one or more embodiments are set forth in the accompanying drawings and the description below. Other features, objects, and advantages will be apparent from the description, drawings, and claims.

BRIEF DESCRIPTION OF THE DRAWINGS

In the following embodiments of the invention are described in more detail with reference to the attached figures and drawings, in which:

FIG. 1A    is a block diagram showing an example of a video coding system configured to implement embodiments of the invention;

FIG. 1B  is a block diagram showing another example of a video coding system configured to implement embodiments of the invention;

FIG. 2  is a block diagram showing an example of a video encoder configured to implement embodiments of the invention;

FIG. 3  is a block diagram showing an example structure of a video decoder configured to implement embodiments of the invention;

FIG. 4  is a block diagram illustrating an example of an encoding apparatus or a decoding apparatus;

FIG. 5  is a block diagram illustrating another example of an encoding apparatus or a decoding apparatus;

FIG. 6  Intra prediction modes in WC;

FIG. 7  intra mode mapping in wide angle intra prediction;

FIG. 8  reference samples used in multiple reference line intra prediction;

FIG. 9  is an example showing asymmetric filtering for non-square blocks

FIG. 10  illustrates a method of mode dependent interpolation filtering of a current transform block according to an embodiment of the present invention.

FIG. 11  illustrates an encoding or decoding device according to an embodiment of the present invention.

In the following identical reference signs refer to identical or at least functionally equivalent features if not explicitly specified otherwise.

DETAILED DESCRIPTION OF THE EMBODIMENTS

In the following description, reference is made to the accompanying figures, which form part of the disclosure, and which show, by way of illustration, specific aspects of embodiments of the invention or specific aspects in which embodiments of the present invention may be used. It is understood that embodiments of the invention may be used in other aspects and comprise structural or logical changes not depicted in the figures. The following detailed description, therefore, is not to be taken in a limiting sense, and the scope of the present invention is defined by the appended claims.

For instance, it is understood that a disclosure in connection with a described method may also hold true for a corresponding device or system configured to perform the method and vice versa. For example, if one or a plurality of specific method steps are described, a corresponding device may include one or a plurality of units, e.g. functional units, to perform the described one or plurality of method steps (e.g. one unit performing the one or plurality of steps, or a plurality of units each performing one or more of the plurality of steps), even if such one or more units are not explicitly described or illustrated in the figures. On the other hand, for example, if a specific apparatus is described based on one or a plurality of units, e.g. functional units, a corresponding method may include one step to perform the functionality of the one or plurality of units (e.g. one step performing the functionality of the one or plurality of units, or a plurality of steps each performing the functionality of one or more of the plurality of units), even if such one or plurality of steps are not explicitly described or illustrated in the figures. Further, it is understood that the features of the various exemplary embodiments and/or aspects described herein may be combined with each other, unless specifically noted otherwise.

Video coding typically refers to the processing of a sequence of pictures, which form the video or video sequence. Instead of the term "picture" the term "frame" or "image" may be used as synonyms in the field of video coding. Video coding (or coding in general) comprises two parts video encoding and video decoding. Video encoding is performed at the source side, typically comprising processing (e.g. by compression) the original video pictures to reduce the amount of data required for representing the video pictures (for more efficient storage and/or transmission). Video decoding is performed at the destination side and typically comprises the inverse processing compared to the encoder to reconstruct the video pictures. Embodiments referring to "coding" of video pictures (or pictures in general) shall be understood to relate to "encoding" or "decoding" of video pictures or respective video sequences. The combination of the encoding part and the decoding part is also referred to as CODEC (Coding and Decoding).

In case of lossless video coding, the original video pictures can be reconstructed, i.e. the reconstructed video pictures have the same quality as the original video pictures (assuming no transmission loss or other data loss during storage or transmission). In case of lossy video coding, further compression, e.g. by quantization, is performed, to reduce the amount of data representing the video pictures, which cannot be completely reconstructed at the decoder, i.e. the quality of the reconstructed video pictures is lower or worse compared to the quality of the original video pictures.

Several video coding standards belong to the group of "lossy hybrid video codecs" (i.e. combine spatial and temporal prediction in the sample domain and 2D transform coding for applying quantization in the transform domain). Each picture of a video sequence is typically partitioned into a set of non-overlapping blocks and the coding is typically performed on a block level. In other words, at the encoder the video is typically processed, i.e. encoded, on a block (video block) level, e.g. by using spatial (intra picture) prediction and/or temporal (inter picture) prediction to generate a prediction block, subtracting the prediction block from the current block (block currently processed/to be processed) to obtain a residual block, transforming the residual block and quantizing the residual block in the transform domain to reduce the amount of data to be transmitted (compression), whereas at the decoder the inverse processing compared to the encoder is applied to the encoded or compressed block to reconstruct the current block for representation. Furthermore, the encoder duplicates the decoder processing loop such that both will generate identical predictions (e.g. intra- and inter predictions) and/or re-constructions for processing, i.e. coding, the subsequent blocks.

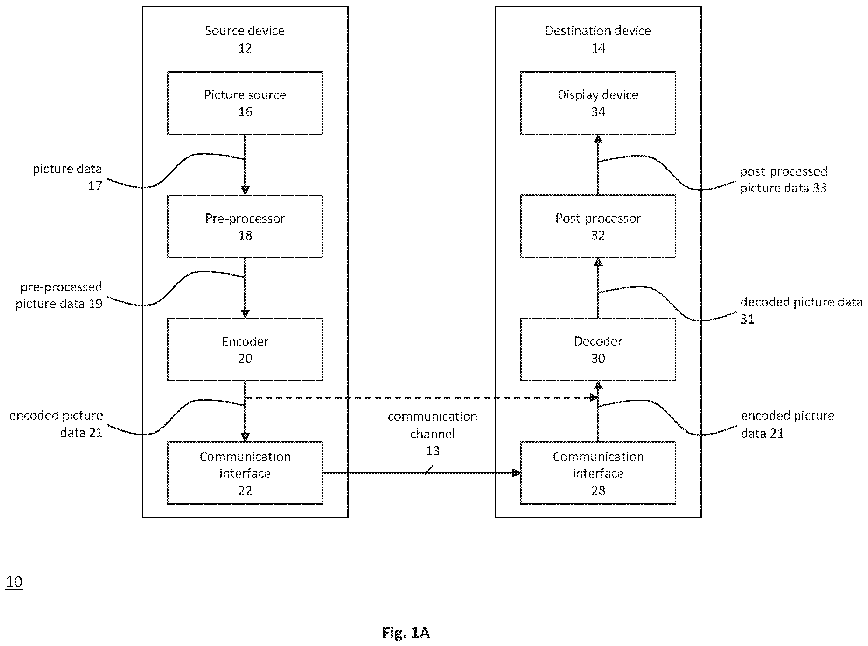

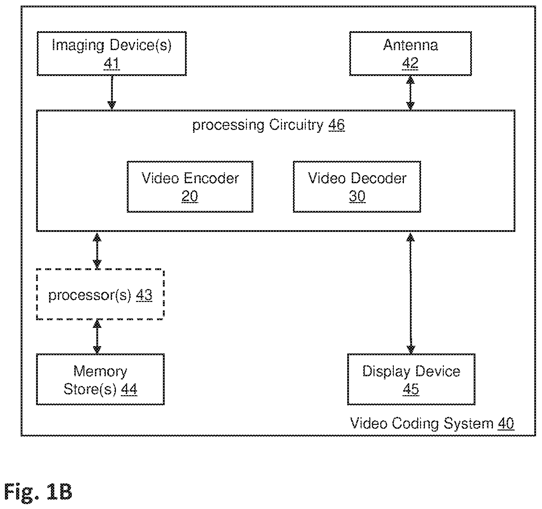

In the following embodiments of a video coding system 10, a video encoder 20 and a video decoder 30 are described based on Figs. 1 to 3.

Fig. 1A is a schematic block diagram illustrating an example coding system 10, e.g. a video coding system 10 (or short coding system 10) that may utilize techniques of this present application. Video encoder 20 (or short encoder 20) and video decoder 30 (or short decoder 30) of video coding system 10 represent examples of devices that may be configured to perform techniques in accordance with various examples described in the present application.

As shown in FIG. 1A, the coding system 10 comprises a source device 12 configured to provide encoded picture data 21 e.g. to a destination device 14 for decoding the encoded picture data 13.

The source device 12 comprises an encoder 20, and may additionally, i.e. optionally, comprise a picture source 16, a pre-processor (or pre-processing unit) 18, e.g. a picture pre-processor 18, and a communication interface or communication unit 22.

The picture source 16 may comprise or be any kind of picture capturing device, for example a camera for capturing a real-world picture, and/or any kind of a picture generating device, for example a computer-graphics processor for generating a computer animated picture, or any kind of other device for obtaining and/or providing a real-world picture, a computer generated picture (e.g. a screen content, a virtual reality (VR) picture) and/or any combination thereof (e.g. an augmented reality (AR) picture). The picture source may be any kind of memory or storage storing any of the aforementioned pictures.

In distinction to the pre-processor 18 and the processing performed by the pre-processing unit 18, the picture or picture data 17 may also be referred to as raw picture or raw picture data 17.

Pre-processor 18 is configured to receive the (raw) picture data 17 and to perform pre-processing on the picture data 17 to obtain a pre-processed picture 19 or pre-processed picture data 19. Pre-processing performed by the pre-processor 18 may, e.g., comprise trimming, color format conversion (e.g. from RGB to YCbCr), color correction, or de-noising. It can be understood that the pre-processing unit 18 may be optional component.

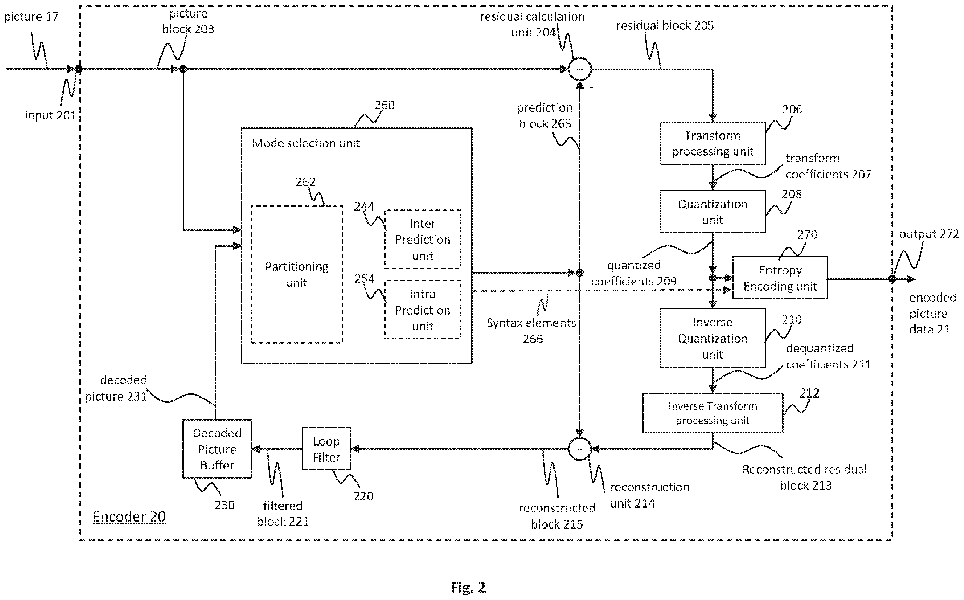

The video encoder 20 is configured to receive the pre-processed picture data 19 and provide encoded picture data 21 (further details will be described below, e.g., based on Fig. 2).

Communication interface 22 of the source device 12 may be configured to receive the encoded picture data 21 and to transmit the encoded picture data 21 (or any further processed version thereof) over communication channel 13 to another device, e.g. the destination device 14 or any other device, for storage or direct reconstruction.

The destination device 14 comprises a decoder 30 (e.g. a video decoder 30), and may additionally, i.e. optionally, comprise a communication interface or communication unit 28, a post-processor 32 (or post-processing unit 32) and a display device 34.

The communication interface 28 of the destination device 14 is configured receive the encoded picture data 21 (or any further processed version thereof), e.g. directly from the source device 12 or from any other source, e.g. a storage device, e.g. an encoded picture data storage device, and provide the encoded picture data 21 to the decoder 30.

The communication interface 22 and the communication interface 28 may be configured to transmit or receive the encoded picture data 21 or encoded data 13 via a direct communication link between the source device 12 and the destination device 14, e.g. a direct wired or wireless connection, or via any kind of network, e.g. a wired or wireless network or any combination thereof, or any kind of private and public network, or any kind of combination thereof.

The communication interface 22 may be, e.g., configured to package the encoded picture data 21 into an appropriate format, e.g. packets, and/or process the encoded picture data using any kind of transmission encoding or processing for transmission over a communication link or communication network.

The communication interface 28, forming the counterpart of the communication interface 22, may be, e.g., configured to receive the transmitted data and process the transmission data using any kind of corresponding transmission decoding or processing and/or de-packaging to obtain the encoded picture data 21.

Both, communication interface 22 and communication interface 28 may be configured as unidirectional communication interfaces as indicated by the arrow for the communication channel 13 in Fig. 1A pointing from the source device 12 to the destination device 14, or bi-directional communication interfaces, and may be configured, e.g. to send and receive messages, e.g. to set up a connection, to acknowledge and exchange any other information related to the communication link and/or data transmission, e.g. encoded picture data transmission.

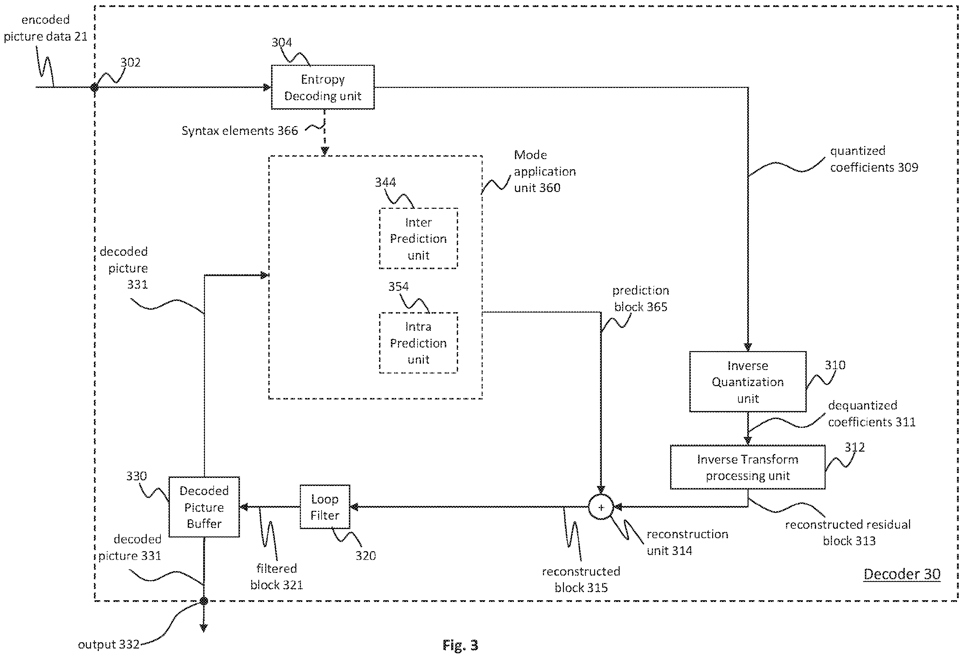

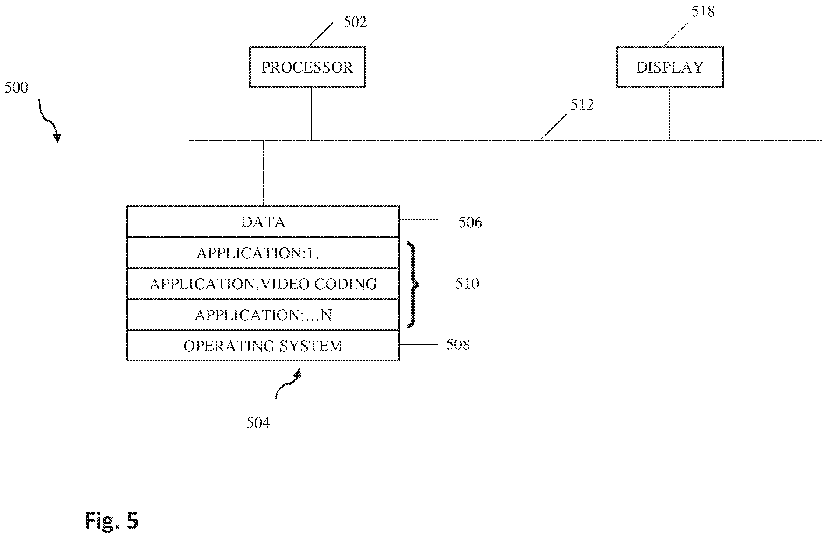

The decoder 30 is configured to receive the encoded picture data 21 and provide decoded picture data 31 or a decoded picture 31 (further details will be described below, e.g., based on Fig. 3 or Fig. 5).

The post-processor 32 of destination device 14 is configured to post-process the decoded picture data 31 (also called reconstructed picture data), e.g. the decoded picture 31, to obtain post-processed picture data 33, e.g. a post-processed picture 33. The post-processing performed by the post-processing unit 32 may comprise, e.g. color format conversion (e.g. from YCbCr to RGB), color correction, trimming, or re-sampling, or any other processing, e.g. for preparing the decoded picture data 31 for display, e.g. by display device 34.

The display device 34 of the destination device 14 is configured to receive the post-processed picture data 33 for displaying the picture, e.g. to a user or viewer. The display device 34 may be or comprise any kind of display for representing the reconstructed picture, e.g. an integrated or external display or monitor. The displays may, e.g. comprise liquid crystal displays (LCD), organic light emitting diodes (OLED) displays, plasma displays, projectors , micro LED displays, liquid crystal on silicon (LCoS), digital light processor (DLP) or any kind of other display.

Although Fig. 1A depicts the source device 12 and the destination device 14 as separate devices, embodiments of devices may also comprise both or both functionalities, the source device 12 or corresponding functionality and the destination device 14 or corresponding functionality. In such embodiments the source device 12 or corresponding functionality and the destination device 14 or corresponding functionality may be implemented using the same hardware and/or software or by separate hardware and/or software or any combination thereof.

As will be apparent for the skilled person based on the description, the existence and (exact) split of functionalities of the different units or functionalities within the source device 12 and/or destination device 14 as shown in Fig. 1A may vary depending on the actual device and application.

The encoder **20** (e.g. a video encoder 20) or the decoder **30** (e.g. a video decoder 30) or both encoder 20 and decoder 30 may be implemented via processing circuitry as shown in Fig. 1B, such as one or more microprocessors, digital signal processors (DSPs), application-specific integrated circuits (ASICs), field-programmable gate arrays (FPGAs), discrete logic, hardware, video coding dedicated or any combinations thereof. The encoder 20 may be implemented via processing circuitry 46 to embody the various modules as discussed with respect to encoder 20of FIG. 2 and/or any other encoder system or subsystem described herein. The decoder 30 may be implemented via processing circuitry 46 to embody the various modules as discussed with respect to decoder 30 of FIG. 3 and/or any other decoder system or subsystem described herein. The processing circuitry may be configured to perform the various operations as discussed later. As shown in Fig. 5, if the techniques are implemented partially in software, a device may store instructions for the software in a suitable, non-transitory computer-readable storage medium and may execute the instructions in hardware using one or more processors to perform the techniques of this disclosure. Either of video encoder **20** and video decoder **30** may be integrated as part of a combined encoder/decoder (CODEC) in a single device, for example, as shown in Fig. 1B.

Source device 12 and destination device 14 may comprise any of a wide range of devices, including any kind of handheld or stationary devices, e.g. notebook or laptop computers, mobile phones, smart phones, tablets or tablet computers, cameras, desktop computers, set-top boxes, televisions, display devices, digital media players, video gaming consoles, video streaming devices(such as content services servers or content delivery servers), broadcast receiver device, broadcast transmitter device, or the like and may use no or any kind of operating system. In some cases, the source device 12 and the destination device 14 may be equipped for wireless communication. Thus, the source device 12 and the destination device 14 may be wireless communication devices.

In some cases, video coding system **10** illustrated in Fig. 1A is merely an example and the techniques of the present application may apply to video coding settings (e.g., video encoding or video decoding) that do not necessarily include any data communication between the encoding and decoding devices. In other examples, data is retrieved from a local memory, streamed over a network, or the like. A video encoding device may encode and store data to memory, and/or a video decoding device may retrieve and decode data from memory. In some examples, the encoding and decoding is performed by devices that do not communicate with one another, but simply encode data to memory and/or retrieve and decode data from memory.

For convenience of description, embodiments of the invention are described herein, for example, by reference to High-Efficiency Video Coding (HEVC) or to the reference software of Versatile Video coding (VVC), the next generation video coding standard developed by the Joint Collaboration Team on Video Coding (JCT-VC) of ITU-T Video Coding Experts Group (VCEG) and ISO/IEC Motion Picture Experts Group (MPEG). One of ordinary skill in the art will understand that embodiments of the invention are not limited to HEVC or WC.

Encoder and Encoding Method

Fig. 2 shows a schematic block diagram of an example video encoder 20 that is configured to implement the techniques of the present application. In the example of Fig. 2, the video encoder 20 comprises an input 201 (or input interface 201), a residual calculation unit 204, a transform processing unit 206, a quantization unit 208, an inverse quantization unit 210, and inverse transform processing unit 212, a reconstruction unit 214, a loop filter unit 220, a decoded picture buffer (DPB) 230, a mode selection unit 260, an entropy encoding unit 270 and an output 272 (or output interface 272). The mode selection unit 260 may include an inter prediction unit 244, an intra prediction unit 254 and a partitioning unit 262. Inter prediction unit 244 may include a motion estimation unit and a motion compensation unit (not shown). A video encoder 20 as shown in Fig. 2 may also be referred to as hybrid video encoder or a video encoder according to a hybrid video codec.

The residual calculation unit 204, the transform processing unit 206, the quantization unit 208, the mode selection unit 260 may be referred to as forming a forward signal path of the encoder 20, whereas the inverse quantization unit 210, the inverse transform processing unit 212, the reconstruction unit 214, the buffer 216, the loop filter 220, the decoded picture buffer (DPB) 230, the inter prediction unit 244 and the intra-prediction unit 254 may be referred to as forming a backward signal path of the video encoder 20, wherein the backward signal path of the video encoder 20 corresponds to the signal path of the decoder (see video decoder 30 in Fig. 3). The inverse quantization unit 210, the inverse transform processing unit 212, the reconstruction unit 214, the loop filter 220, the decoded picture buffer (DPB) 230, the inter prediction unit 244 and the intra-prediction unit 254 are also referred to forming the "built-in decoder" of video encoder 20.

Pictures & Picture Partitioning (Pictures & Blocks)

The encoder 20 may be configured to receive, e.g. via input 201, a picture 17 (or picture data 17), e.g. picture of a sequence of pictures forming a video or video sequence. The received picture or picture data may also be a pre-processed picture 19 (or pre-processed picture data 19). For sake of simplicity the following description refers to the picture 17. The picture 17 may also be referred to as current picture or picture to be coded (in particular in video coding to distinguish the current picture from other pictures, e.g. previously encoded and/or decoded pictures of the same video sequence, i.e. the video sequence which also comprises the current picture).

A (digital) picture is or can be regarded as a two-dimensional array or matrix of samples with intensity values. A sample in the array may also be referred to as pixel (short form of picture element) or a pel. The number of samples in horizontal and vertical direction (or axis) of the array or picture define the size and/or resolution of the picture. For representation of color, typically three color components are employed, i.e. the picture may be represented or include three sample arrays. In RBG format or color space a picture comprises a corresponding red, green and blue sample array. However, in video coding each pixel is typically represented in a luminance and chrominance format or color space, e.g. YCbCr, which comprises a luminance component indicated by Y (sometimes also L is used instead) and two chrominance components indicated by Cb and Cr. The luminance (or short luma) component Y represents the brightness or grey level intensity (e.g. like in a grey-scale picture), while the two chrominance (or short chroma) components Cb and Cr represent the chromaticity or color information components. Accordingly, a picture in YCbCr format comprises a luminance sample array of luminance sample values (Y), and two chrominance sample arrays of chrominance values (Cb and Cr). Pictures in RGB format may be converted or transformed into YCbCr format and vice versa, the process is also known as color transformation or conversion. If a picture is monochrome, the picture may comprise only a luminance sample array. Accordingly, a picture may be, for example, an array of luma samples in monochrome format or an array of luma samples and two corresponding arrays of chroma samples in 4:2:0, 4:2:2, and 4:4:4 colour format.

Embodiments of the video encoder 20 may comprise a picture partitioning unit (not depicted in Fig. 2) configured to partition the picture 17 into a plurality of (typically non-overlapping) picture blocks 203. These blocks may also be referred to as root blocks, macro blocks (H.264/AVC) or coding tree blocks (CTB) or coding tree units (CTU) (H.265/HEVC and VVC). The picture partitioning unit may be configured to use the same block size for all pictures of a video sequence and the corresponding grid defining the block size, or to change the block size between pictures or subsets or groups of pictures, and partition each picture into the corresponding blocks.

In further embodiments, the video encoder may be configured to receive directly a block 203 of the picture 17, e.g. one, several or all blocks forming the picture 17. The picture block 203 may also be referred to as current picture block or picture block to be coded.

Like the picture 17, the picture block 203 again is or can be regarded as a two-dimensional array or matrix of samples with intensity values (sample values), although of smaller dimension than the picture 17. In other words, the block 203 may comprise, e.g., one sample array (e.g. a luma array in case of a monochrome picture 17, or a luma or chroma array in case of a color picture) or three sample arrays (e.g. a luma and two chroma arrays in case of a color picture 17) or any other number and/or kind of arrays depending on the color format applied. The number of samples in horizontal and vertical direction (or axis) of the block 203 define the size of block 203. Accordingly, a block may, for example, an MxN (M-column by N-row) array of samples, or an MxN array of transform coefficients.

Embodiments of the video encoder 20 as shown in Fig. 2 may be configured to encode the picture 17 block by block, e.g. the encoding and prediction is performed per block 203.

Embodiments of the video encoder 20 as shown in Fig. 2 may be further configured to partition and/or encode the picture by using slices (also referred to as video slices), wherein a picture may be partitioned into or encoded using one or more slices (typically non-overlapping), and each slice may comprise one or more blocks (e.g. CTUs).

Embodiments of the video encoder 20 as shown in Fig. 2 may be further configured to partition and/or encode the picture by using tile groups (also referred to as video tile groups) and/or tiles (also referred to as video tiles), wherein a picture may be partitioned into or encoded using one or more tile groups (typically non-overlapping), and each tile group may comprise, e.g. one or more blocks (e.g. CTUs) or one or more tiles, wherein each tile, e.g. may be of rectangular shape and may comprise one or more blocks (e.g. CTLTs), e.g. complete or fractional blocks.

Residual Calculation

The residual calculation unit 204 may be configured to calculate a residual block 205 (also referred to as residual 205) based on the picture block 203 and a prediction block 265 (further details about the prediction block 265 are provided later), e.g. by subtracting sample values of the prediction block 265 from sample values of the picture block 203, sample by sample (pixel by pixel) to obtain the residual block 205 in the sample domain.

Transform

The transform processing unit 206 may be configured to apply a transform, e.g. a discrete cosine transform (DCT) or discrete sine transform (DST), on the sample values of the residual block 205 to obtain transform coefficients 207 in a transform domain. The transform coefficients 207 may also be referred to as transform residual coefficients and represent the residual block 205 in the transform domain.

The transform processing unit 206 may be configured to apply integer approximations of DCT/DST, such as the transforms specified for H.265/HEVC. Compared to an orthogonal DCT transform, such integer approximations are typically scaled by a certain factor. In order to preserve the norm of the residual block which is processed by forward and inverse transforms, additional scaling factors are applied as part of the transform process. The scaling factors are typically chosen based on certain constraints like scaling factors being a power of two for shift operations, bit depth of the transform coefficients, tradeoff between accuracy and implementation costs, etc. Specific scaling factors are, for example, specified for the inverse transform, e.g. by inverse transform processing unit 212 (and the corresponding inverse transform, e.g. by inverse transform processing unit 312 at video decoder 30) and corresponding scaling factors for the forward transform, e.g. by transform processing unit 206, at an encoder 20 may be specified accordingly.

Embodiments of the video encoder 20 (respectively transform processing unit 206) may be configured to output transform parameters, e.g. a type of transform or transforms, e.g. directly or encoded or compressed via the entropy encoding unit 270, so that, e.g., the video decoder 30 may receive and use the transform parameters for decoding.

Quantization

The quantization unit 208 may be configured to quantize the transform coefficients 207 to obtain quantized coefficients 209, e.g. by applying scalar quantization or vector quantization. The quantized coefficients 209 may also be referred to as quantized transform coefficients 209 or quantized residual coefficients 209.

The quantization process may reduce the bit depth associated with some or all of the transform coefficients 207. For example, an n-bit transform coefficient may be rounded down to an m-bit Transform coefficient during quantization, where n is greater than m. The degree of quantization may be modified by adjusting a quantization parameter (QP). For example for scalar quantization, different scaling may be applied to achieve finer or coarser quantization. Smaller quantization step sizes correspond to finer quantization, whereas larger quantization step sizes correspond to coarser quantization. The applicable quantization step size may be indicated by a quantization parameter (QP). The quantization parameter may for example be an index to a predefined set of applicable quantization step sizes. For example, small quantization parameters may correspond to fine quantization (small quantization step sizes) and large quantization parameters may correspond to coarse quantization (large quantization step sizes) or vice versa. The quantization may include division by a quantization step size and a corresponding and/or the inverse dequantization, e.g. by inverse quantization unit 210, may include multiplication by the quantization step size.

Embodiments according to some standards, e.g. HEVC, may be configured to use a quantization parameter to determine the quantization step size. Generally, the quantization step size may be calculated based on a quantization parameter using a fixed point approximation of an equation including division. Additional scaling factors may be introduced for quantization and dequantization to restore the norm of the residual block, which might get modified because of the scaling used in the fixed point approximation of the equation for quantization step size and quantization parameter. In one example implementation, the scaling of the inverse transform and dequantization might be combined. Alternatively, customized quantization tables may be used and signaled from an encoder to a decoder, e.g. in a bitstream. The quantization is a lossy operation, wherein the loss increases with increasing quantization step sizes.

Embodiments of the video encoder 20 (respectively quantization unit 208) may be configured to output quantization parameters (QP), e.g. directly or encoded via the entropy encoding unit 270, so that, e.g., the video decoder 30 may receive and apply the quantization parameters for decoding.

Inverse Quantization

The inverse quantization unit 210 is configured to apply the inverse quantization of the quantization unit 208 on the quantized coefficients to obtain dequantized coefficients 211, e.g. by applying the inverse of the quantization scheme applied by the quantization unit 208 based on or using the same quantization step size as the quantization unit 208. The dequantized coefficients 211 may also be referred to as dequantized residual coefficients 211 and correspond - although typically not identical to the transform coefficients due to the loss by quantization - to the transform coefficients 207.

Inverse Transform

The inverse transform processing unit 212 is configured to apply the inverse transform of the transform applied by the transform processing unit 206, e.g. an inverse discrete cosine transform (DCT) or inverse discrete sine transform (DST) or other inverse transforms, to obtain a reconstructed residual block 213 (or corresponding dequantized coefficients 213) in the sample domain. The reconstructed residual block 213 may also be referred to as transform block 213.

Reconstruction

The reconstruction unit 214 (e.g. adder or summer 214) is configured to add the transform block 213 (i.e. reconstructed residual block 213) to the prediction block 265 to obtain a reconstructed block 215 in the sample domain, e.g. by adding - sample by sample - the sample values of the reconstructed residual block 213 and the sample values of the prediction block 265.

Filtering

The loop filter unit 220 (or short "loop filter" 220), is configured to filter the reconstructed block 215 to obtain a filtered block 221, or in general, to filter reconstructed samples to obtain filtered samples. The loop filter unit is, e.g., configured to smooth pixel transitions, or otherwise improve the video quality. The loop filter unit 220 may comprise one or more loop filters such as a de-blocking filter, a sample-adaptive offset (SAO) filter or one or more other filters, e.g. a bilateral filter, an adaptive loop filter (ALF), a sharpening, a smoothing filters or a collaborative filters, or any combination thereof. Although the loop filter unit 220 is shown in FIG. 2 as being an in loop filter, in other configurations, the loop filter unit 220 may be implemented as a post loop filter. The filtered block 221 may also be referred to as filtered reconstructed block 221.

Embodiments of the video encoder 20 (respectively loop filter unit 220) may be configured to output loop filter parameters (such as sample adaptive offset information), e.g. directly or encoded via the entropy encoding unit 270, so that, e.g., a decoder 30 may receive and apply the same loop filter parameters or respective loop filters for decoding.

Decoded Picture Buffer

The decoded picture buffer (DPB) 230 may be a memory that stores reference pictures, or in general reference picture data, for encoding video data by video encoder 20. The DPB 230 may be formed by any of a variety of memory devices, such as dynamic random access memory (DRAM), including synchronous DRAM (SDRAM), magnetoresistive RAM (MRAM), resistive RAM (RRAM), or other types of memory devices. The decoded picture buffer (DPB) 230 may be configured to store one or more filtered blocks 221. The decoded picture buffer 230 may be further configured to store other previously filtered blocks, e.g. previously reconstructed and filtered blocks 221, of the same current picture or of different pictures, e.g. previously reconstructed pictures, and may provide complete previously reconstructed, i.e. decoded, pictures (and corresponding reference blocks and samples) and/or a partially reconstructed current picture (and corresponding reference blocks and samples), for example for inter prediction. The decoded picture buffer (DPB) 230 may be also configured to store one or more unfiltered reconstructed blocks 215, or in general unfiltered reconstructed samples, e.g. if the reconstructed block 215 is not filtered by loop filter unit 220, or any other further processed version of the reconstructed blocks or samples.

Mode Selection (Partitioning & Prediction)

The mode selection unit 260 comprises partitioning unit 262, inter-prediction unit 244 and intra-prediction unit 254, and is configured to receive or obtain original picture data, e.g. an original block 203 (current block 203 of the current picture 17), and reconstructed picture data, e.g. filtered and/or unfiltered reconstructed samples or blocks of the same (current) picture and/or from one or a plurality of previously decoded pictures, e.g. from decoded picture buffer 230 or other buffers (e.g. line buffer, not shown).. The reconstructed picture data is used as reference picture data for prediction, e.g. inter-prediction or intra-prediction, to obtain a prediction block 265 or predictor 265.

Mode selection unit 260 may be configured to determine or select a partitioning for a current block prediction mode (including no partitioning) and a prediction mode (e.g. an intra or inter prediction mode) and generate a corresponding prediction block 265, which is used for the calculation of the residual block 205 and for the reconstruction of the reconstructed block 215.

Embodiments of the mode selection unit 260 may be configured to select the partitioning and the prediction mode (e.g. from those supported by or available for mode selection unit 260), which provide the best match or in other words the minimum residual (minimum residual means better compression for transmission or storage), or a minimum signaling overhead (minimum signaling overhead means better compression for transmission or storage), or which considers or balances both. The mode selection unit 260 may be configured to determine the partitioning and prediction mode based on rate distortion optimization (RDO), i.e. select the prediction mode which provides a minimum rate distortion. Terms like "best", "minimum", "optimum" etc. in this context do not necessarily refer to an overall "best", "minimum", "optimum", etc. but may also refer to the fulfillment of a termination or selection criterion like a value exceeding or falling below a threshold or other constraints leading potentially to a "sub-optimum selection" but reducing complexity and processing time.

In other words, the partitioning unit 262 may be configured to partition the block 203 into smaller block partitions or sub-blocks (which form again blocks), e.g. iteratively using quad-tree-partitioning (QT), binary partitioning (BT) or triple-tree-partitioning (TT) or any combination thereof, and to perform, e.g., the prediction for each of the block partitions or sub-blocks, wherein the mode selection comprises the selection of the tree-structure of the partitioned block 203 and the prediction modes are applied to each of the block partitions or sub-blocks.

In the following the partitioning (e.g. by partitioning unit 260) and prediction processing (by inter-prediction unit 244 and intra-prediction unit 254) performed by an example video encoder 20 will be explained in more detail.

Partitioning

The partitioning unit 262 may partition (or split) a current block 203 into smaller partitions, e.g. smaller blocks of square or rectangular size. These smaller blocks (which may also be referred to as sub-blocks) may be further partitioned into even smaller partitions. This is also referred to tree-partitioning or hierarchical tree-partitioning, wherein a root block, e.g. at root tree-level 0 (hierarchy-level 0, depth 0), may be recursively partitioned, e.g. partitioned into two or more blocks of a next lower tree-level, e.g. nodes at tree-level 1 (hierarchy-level 1, depth 1), wherein these blocks may be again partitioned into two or more blocks of a next lower level, e.g. tree-level 2 (hierarchy-level 2, depth 2), etc. until the partitioning is terminated, e.g. because a termination criterion is fulfilled, e.g. a maximum tree depth or minimum block size is reached. Blocks which are not further partitioned are also referred to as leaf-blocks or leaf nodes of the tree. A tree using partitioning into two partitions is referred to as binary-tree (BT), a tree using partitioning into three partitions is referred to as ternary-tree (TT), and a tree using partitioning into four partitions is referred to as quad-tree (QT).

As mentioned before, the term "block" as used herein may be a portion, in particular a square or rectangular portion, of a picture. With reference, for example, to HEVC and WC, the block may be or correspond to a coding tree unit (CTU), a coding unit (CU), prediction unit (PU), and transform unit (TU) and/or to the corresponding blocks, e.g. a coding tree block (CTB), a coding block (CB), a transform block (TB) or prediction block (PB).

For example, a coding tree unit (CTU) may be or comprise a CTB of luma samples, two corresponding CTBs of chroma samples of a picture that has three sample arrays, or a CTB of samples of a monochrome picture or a picture that is coded using three separate colour planes and syntax structures used to code the samples. Correspondingly, a coding tree block (CTB) may be an NxN block of samples for some value of N such that the division of a component into CTBs is a partitioning. A coding unit (CU) may be or comprise a coding block of luma samples, two corresponding coding blocks of chroma samples of a picture that has three sample arrays, or a coding block of samples of a monochrome picture or a picture that is coded using three separate colour planes and syntax structures used to code the samples. Correspondingly a coding block (CB) may be an MxN block of samples for some values of M and N such that the division of a CTB into coding blocks is a partitioning.

In embodiments, e.g., according to HEVC, a coding tree unit (CTU) may be split into CUs by using a quad-tree structure denoted as coding tree. The decision whether to code a picture area using inter-picture (temporal) or intra-picture (spatial) prediction is made at the CU level. Each CU can be further split into one, two or four PUs according to the PU splitting type. Inside one PU, the same prediction process is applied and the relevant information is transmitted to the decoder on a PU basis. After obtaining the residual block by applying the prediction process based on the PU splitting type, a CU can be partitioned into transform units (TUs) according to another quadtree structure similar to the coding tree for the CU.

In embodiments, e.g., according to the latest video coding standard currently in development, which is referred to as Versatile Video Coding (VVC), a combined Quad-tree and binary tree (QFBT) partitioning is for example used to partition a coding block. In the QTBT block structure, a CU can have either a square or rectangular shape. For example, a coding tree unit (CTU) is first partitioned by a quadtree structure. The quadtree leaf nodes are further partitioned by a binary tree or ternary (or triple) tree structure. The partitioning tree leaf nodes are called coding units (CUs), and that segmentation is used for prediction and transform processing without any further partitioning. This means that the CU, PU and TU have the same block size in the QTBT coding block structure. In parallel, multiple partition, for example, triple tree partition may be used together with the QTBT block structure.

In one example, the mode selection unit 260 of video encoder 20 may be configured to perform any combination of the partitioning techniques described herein.

As described above, the video encoder 20 is configured to determine or select the best or an optimum prediction mode from a set of (e.g. pre-determined) prediction modes. The set of prediction modes may comprise, e.g., intra-prediction modes and/or inter-prediction modes.

Intra-Prediction

The set of intra-prediction modes may comprise 35 different intra-prediction modes, e.g. non-directional modes like DC (or mean) mode and planar mode, or directional modes, e.g. as defined in HEVC, or may comprise 67 different intra-prediction modes, e.g. non-directional modes like DC (or mean) mode and planar mode, or directional modes, e.g. as defined for VVC.

The intra-prediction unit 254 is configured to use reconstructed samples of neighboring blocks of the same current picture to generate an intra-prediction block 265 according to an intra-prediction mode of the set of intra-prediction modes.

The intra prediction unit 254 (or in general the mode selection unit 260) is further configured to output intra-prediction parameters (or in general information indicative of the selected intra prediction mode for the block) to the entropy encoding unit 270 in form of syntax elements 266 for inclusion into the encoded picture data 21, so that, e.g., the video decoder 30 may receive and use the prediction parameters for decoding.

Inter-Prediction

The set of (or possible) inter-prediction modes depends on the available reference pictures (i.e. previous at least partially decoded pictures, e.g. stored in DBP 230) and other inter-prediction parameters, e.g. whether the whole reference picture or only a part, e.g. a search window area around the area of the current block, of the reference picture is used for searching for a best matching reference block, and/or e.g. whether pixel interpolation is applied, e.g. half/semi-pel and/or quarter-pel interpolation, or not.

Additional to the above prediction modes, skip mode and/or direct mode may be applied.

The inter prediction unit 244 may include a motion estimation (ME) unit and a motion compensation (MC) unit (both not shown in Fig.2). The motion estimation unit may be configured to receive or obtain the picture block 203 (current picture block 203 of the current picture 17) and a decoded picture 231, or at least one or a plurality of previously reconstructed blocks, e.g. reconstructed blocks of one or a plurality of other/different previously decoded pictures 231, for motion estimation. E.g. a video sequence may comprise the current picture and the previously decoded pictures 231, or in other words, the current picture and the previously decoded pictures 231 may be part of or form a sequence of pictures forming a video sequence.

The encoder 20 may, e.g., be configured to select a reference block from a plurality of reference blocks of the same or different pictures of the plurality of other pictures and provide a reference picture (or reference picture index) and/or an offset (spatial offset) between the position (x, y coordinates) of the reference block and the position of the current block as inter prediction parameters to the motion estimation unit. This offset is also called motion vector (MV).

The motion compensation unit is configured to obtain, e.g. receive, an inter prediction parameter and to perform inter prediction based on or using the inter prediction parameter to obtain an inter prediction block 265. Motion compensation, performed by the motion compensation unit, may involve fetching or generating the prediction block based on the motion/block vector determined by motion estimation, possibly performing interpolations to sub-pixel precision. Interpolation filtering may generate additional pixel samples from known pixel samples, thus potentially increasing the number of candidate prediction blocks that may be used to code a picture block. Upon receiving the motion vector for the PU of the current picture block, the motion compensation unit may locate the prediction block to which the motion vector points in one of the reference picture lists.

The motion compensation unit may also generate syntax elements associated with the blocks and video slices for use by video decoder 30 in decoding the picture blocks of the video slice. In addition or as an alternative to slices and respective syntax elements, tile groups and/or tiles and respective syntax elements may be generated or used.

Entropy Coding

The entropy encoding unit 270 is configured to apply, for example, an entropy encoding algorithm or scheme (e.g. a variable length coding (VLC) scheme, an context adaptive VLC scheme (CAVLC), an arithmetic coding scheme, a binarization, a context adaptive binary arithmetic coding (CABAC), syntax-based context-adaptive binary arithmetic coding (SBAC), probability interval partitioning entropy (PIPE) coding or another entropy encoding methodology or technique) or bypass (no compression) on the quantized coefficients 209, inter prediction parameters, intra prediction parameters, loop filter parameters and/or other syntax elements to obtain encoded picture data 21 which can be output via the output 272, e.g. in the form of an encoded bitstream 21, so that, e.g., the video decoder 30 may receive and use the parameters for decoding, . The encoded bitstream 21 may be transmitted to video decoder 30, or stored in a memory for later transmission or retrieval by video decoder 30.

Other structural variations of the video encoder 20 can be used to encode the video stream. For example, a non-transform based encoder 20 can quantize the residual signal directly without the transform processing unit 206 for certain blocks or frames. In another implementation, an encoder 20 can have the quantization unit 208 and the inverse quantization unit 210 combined into a single unit.

Decoder and Decoding Method

Fig. 3 shows an example of a video decoder 30 that is configured to implement the techniques of this present application. The video decoder 30 is configured to receive encoded picture data 21 (e.g. encoded bitstream 21), e.g. encoded by encoder 20, to obtain a decoded picture 331. The encoded picture data or bitstream comprises information for decoding the encoded picture data, e.g. data that represents picture blocks of an encoded video slice (and/or tile groups or tiles) and associated syntax elements.

In the example of Fig. 3, the decoder 30 comprises an entropy decoding unit 304, an inverse quantization unit 310, an inverse transform processing unit 312, a reconstruction unit 314 (e.g. a summer 314), a loop filter 320, a decoded picture buffer (DBP) 330, a mode application unit 360, an inter prediction unit 344 and an intra prediction unit 354. Inter prediction unit 344 may be or include a motion compensation unit. Video decoder 30 may, in some examples, perform a decoding pass generally reciprocal to the encoding pass described with respect to video encoder 100 from FIG. 2.

As explained with regard to the encoder 20, the inverse quantization unit 210, the inverse transform processing unit 212, the reconstruction unit 214 the loop filter 220, the decoded picture buffer (DPB) 230, the inter prediction unit 344 and the intra prediction unit 354 are also referred to as forming the "built-in decoder" of video encoder 20. Accordingly, the inverse quantization unit 310 may be identical in function to the inverse quantization unit 110, the inverse transform processing unit 312 may be identical in function to the inverse transform processing unit 212, the reconstruction unit 314 may be identical in function to reconstruction unit 214, the loop filter 320 may be identical in function to the loop filter 220, and the decoded picture buffer 330 may be identical in function to the decoded picture buffer 230. Therefore, the explanations provided for the respective units and functions of the video 20 encoder apply correspondingly to the respective units and functions of the video decoder 30.

Entropy Decoding

The entropy decoding unit 304 is configured to parse the bitstream 21 (or in general encoded picture data 21) and perform, for example, entropy decoding to the encoded picture data 21 to obtain, e.g., quantized coefficients 309 and/or decoded coding parameters (not shown in Fig. 3), e.g. any or all of inter prediction parameters (e.g. reference picture index and motion vector), intra prediction parameter (e.g. intra prediction mode or index), transform parameters, quantization parameters, loop filter parameters, and/or other syntax elements. Entropy decoding unit 304 maybe configured to apply the decoding algorithms or schemes corresponding to the encoding schemes as described with regard to the entropy encoding unit 270 of the encoder 20. Entropy decoding unit 304 may be further configured to provide inter prediction parameters, intra prediction parameter and/or other syntax elements to the mode application unit 360 and other parameters to other units of the decoder 30. Video decoder 30 may receive the syntax elements at the video slice level and/or the video block level. In addition or as an alternative to slices and respective syntax elements, tile groups and/or tiles and respective syntax elements may be received and/or used.

Inverse Quantization

The inverse quantization unit 310 may be configured to receive quantization parameters (QP) (or in general information related to the inverse quantization) and quantized coefficients from the encoded picture data 21 (e.g. by parsing and/or decoding, e.g. by entropy decoding unit 304) and to apply based on the quantization parameters an inverse quantization on the decoded quantized coefficients 309 to obtain dequantized coefficients 311, which may also be referred to as transform coefficients 311. The inverse quantization process may include use of a quantization parameter determined by video encoder 20 for each video block in the video slice (or tile or tile group) to determine a degree of quantization and, likewise, a degree of inverse quantization that should be applied.

Inverse Transform

Inverse transform processing unit 312 may be configured to receive dequantized coefficients 311, also referred to as transform coefficients 311, and to apply a transform to the dequantized coefficients 311 in order to obtain reconstructed residual blocks 213 in the sample domain. The reconstructed residual blocks 213 may also be referred to as transform blocks 313. The transform may be an inverse transform, e.g., an inverse DCT, an inverse DST, an inverse integer transform, or a conceptually similar inverse transform process. The inverse transform processing unit 312 may be further configured to receive transform parameters or corresponding information from the encoded picture data 21 (e.g. by parsing and/or decoding, e.g. by entropy decoding unit 304) to determine the transform to be applied to the dequantized coefficients 311.

Reconstruction

The reconstruction unit 314 (e.g. adder or summer 314) may be configured to add the reconstructed residual block 313, to the prediction block 365 to obtain a reconstructed block 315 in the sample domain, e.g. by adding the sample values of the reconstructed residual block 313 and the sample values of the prediction block 365.

Filtering

The loop filter unit 320 (either in the coding loop or after the coding loop) is configured to filter the reconstructed block 315 to obtain a filtered block 321, e.g. to smooth pixel transitions, or otherwise improve the video quality. The loop filter unit 320 may comprise one or more loop filters such as a de-blocking filter, a sample-adaptive offset (SAO) filter or one or more other filters, e.g. a bilateral filter, an adaptive loop filter (ALF), a sharpening, a smoothing filters or a collaborative filters, or any combination thereof. Although the loop filter unit 320 is shown in FIG. 3 as being an in loop filter, in other configurations, the loop filter unit 320 may be implemented as a post loop filter.

Decoded Picture Buffer

The decoded video blocks 321 of a picture are then stored in decoded picture buffer 330, which stores the decoded pictures 331 as reference pictures for subsequent motion compensation for other pictures and/or for output respectively display.
The decoder 30 is configured to output the decoded picture 311, e.g. via output 312, for presentation or viewing to a user.

Prediction

The inter prediction unit 344 may be identical to the inter prediction unit 244 (in particular to the motion compensation unit) and the intra prediction unit 354 may be identical to the inter prediction unit 254 in function, and performs split or partitioning decisions and prediction based on the partitioning and/or prediction parameters or respective information received from the encoded picture data 21 (e.g. by parsing and/or decoding, e.g. by entropy decoding unit 304). Mode application unit 360 may be configured to perform the prediction (intra or inter prediction) per block based on reconstructed pictures, blocks or respective samples (filtered or unfiltered) to obtain the prediction block 365.
When the video slice is coded as an intra coded (I) slice, intra prediction unit 354 of mode application unit 360 is configured to generate prediction block 365 for a picture block of the current video slice based on a signaled intra prediction mode and data from previously decoded blocks of the current picture. When the video picture is coded as an inter coded (i.e., B, or P) slice, inter prediction unit 344 (e.g. motion compensation unit) of mode application unit 360 is configured to produce prediction blocks 365 for a video block of the current video slice based on the motion vectors and other syntax elements received from entropy decoding unit 304. For inter prediction, the prediction blocks may be produced from one of the reference pictures within one of the reference picture lists. Video decoder 30 may construct the reference frame lists, List 0 and List 1, using default construction techniques based on reference pictures stored in DPB 330. The same or similar may be applied for or by embodiments using tile groups (e.g. video tile groups) and/or tiles (e.g. video tiles) in addition or alternatively to slices (e.g. video slices), e.g. a video may be coded using I, P or B tile groups and /or tiles.
Mode application unit 360 is configured to determine the prediction information for a video block of the current video slice by parsing the motion vectors or related information and other syntax elements, and uses the prediction information to produce the prediction blocks for the current video block being decoded. For example, the mode application unit 360 uses some of the received syntax elements to determine a prediction mode (e.g., intra or inter prediction) used to code the video blocks of the video slice, an inter prediction slice type (e.g., B slice, P slice, or GPB slice), construction information for one or more of the reference picture lists for the slice, motion vectors for each inter encoded video block of the slice, inter prediction status for each inter coded video block of the slice, and other information to decode the video blocks in the current video slice. The same or similar may be applied for or by embodiments using tile groups (e.g. video tile groups) and/or tiles (e.g. video tiles) in addition or alternatively to slices (e.g. video slices), e.g. a video may be coded using I, P or B tile groups and/or tiles.

Embodiments of the video decoder 30 as shown in Fig. 3 may be configured to partition and/or decode the picture by using slices (also referred to as video slices), wherein a picture may be partitioned into or decoded using one or more slices (typically non-overlapping), and each slice may comprise one or more blocks (e.g. CTUs).

Embodiments of the video decoder 30 as shown in Fig. 3 may be configured to partition and/or decode the picture by using tile groups (also referred to as video tile groups) and/or tiles (also referred to as video tiles), wherein a picture may be partitioned into or decoded using one or more tile groups (typically non-overlapping), and each tile group may comprise, e.g. one or more blocks (e.g. CTUs) or one or more tiles, wherein each tile, e.g. may be of rectangular shape and may comprise one or more blocks (e.g. CTUs), e.g. complete or fractional blocks.

Other variations of the video decoder 30 can be used to decode the encoded picture data 21. For example, the decoder 30 can produce the output video stream without the loop filtering unit 320. For example, a non-transform based decoder 30 can inverse-quantize the residual signal directly without the inverse-transform processing unit 312 for certain blocks or frames. In another implementation, the video decoder 30 can have the inverse-quantization unit 310 and the inverse-transform processing unit 312 combined into a single unit.

It should be understood that, in the encoder 20 and the decoder 30, a processing result of a current step may be further processed and then output to the next step. For example, after interpolation filtering, motion vector derivation or loop filtering, a further operation, such as Clip or shift, may be performed on the processing result of the interpolation filtering, motion vector derivation or loop filtering.

It should be noted that further operations may be applied to the derived motion vectors of current block (including but not limit to control point motion vectors of affine mode, sub-block motion vectors in affine, planar, ATMVP modes, temporal motion vectors, and so on). For example, the value of motion vector is constrained to a predefined range according to its representing bit. If the representing bit of motion vector is bitDepth, then the range is $-2^{\wedge}(\text{bitDepth}-1) \sim 2^{\wedge}(\text{bitDepth}-1)-1$, where "$\wedge$" means exponentiation. For example, if bitDepth is set equal to 16, the range is $-32768 \sim 32767$; if bitDepth is set equal to 18, the range is $-131072$-131071. For example, the value of the derived motion vector (e.g. the MVs of four 4x4 sub-blocks within one 8x8 block) is constrained such that the max difference between integer parts of the four 4x4 sub-block MVs is no more than N pixels, such as no more than 1 pixel. Here provides two methods for constraining the motion vector according to the bitDepth.

Method 1: remove the overflow MSB (most significant bit) by flowing operations

$$\text{ux}= (\text{mvx}+2^{\text{bitDepth}}) \% 2^{\text{bitDepth}} \qquad (1)$$

$$\text{mvx} = (\text{ux} >= 2^{\text{bitDepth-1}}) ? (\text{ux} - 2^{\text{bitDepth}}) : \text{ux} \qquad (2)$$

$$\text{uy}= (\text{mvy}+2^{\text{bitDepth}}) \% 2^{\text{bitDepth}} \qquad (3)$$

$$\text{mvy} = (\text{uy} >= 2^{\text{bitDepth-1}}) ? (\text{uy} - 2^{\text{bitDepth}}) : \text{uy} \qquad (4)$$

where mvx is a horizontal component of a motion vector of an image block or a sub-block, mvy is a vertical component of a motion vector of an image block or a sub-block, and ux and uy indicates an intermediate value;

For example, if the value of mvx is -32769, after applying formula (1) and (2), the resulting value is 32767. In computer system, decimal numbers are stored as two's complement. The two's complement of -32769 is 1,0111,1111,1111,1111 (17 bits), then the MSB is discarded, so the resulting two's complement is 0111,1111,1111,1111 (decimal number is 32767), which is same as the output by applying formula (1) and (2).

$$\text{ux}= (\text{mvpx} + \text{mvdx} +2^{\text{bitDepth}}) \% 2^{\text{bitDepth}} \qquad (5)$$

$$\text{mvx} = (\text{ux} >= 2^{\text{bitDepth-1}}) ? (\text{ux} - 2^{\text{bitDepth}}) : \text{ux} \qquad (6)$$

$$uy = (\ mvpy + mvdy + 2^{bitDepth}\ )\ \%\ 2^{bitDepth} \qquad (7)$$

$$mvy = (\ uy >= 2^{bitDepth-1}\ )\ ?\ (uy - 2^{bitDepth}\ ) : uy \qquad (8)$$

The operations may be applied during the sum of mvp and mvd, as shown in formula (5) to (8).

Method 2: remove the overflow MSB by clipping the value

$$vx = Clip3(-2^{bitDepth-1}, 2^{bitDepth-1}\ -1, vx)$$

$$vy = Clip3(-2^{bitDepth-1}, 2^{bitDepth-1}\ -1, vy)$$

where vx is a horizontal component of a motion vector of an image block or a sub-block, vy is a vertical component of a motion vector of an image block or a sub-block; x, y and z respectively correspond to three input value of the MV clipping process, and the definition of function Clip3 is as follow:

$$Clip3(\ x, y, z\ ) = \begin{cases} x & ; & z < x \\ y & ; & z > y \\ z & ; & \text{otherwise} \end{cases}$$

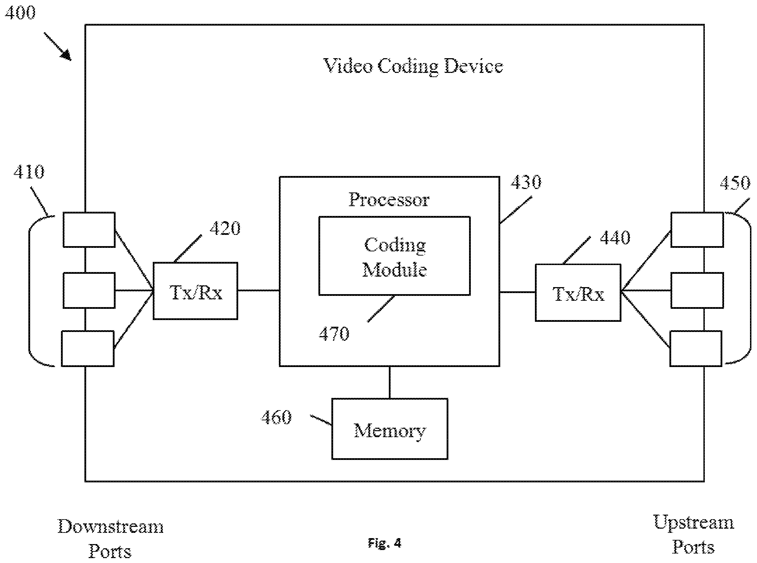

FIG. 4 is a schematic diagram of a video coding device 400 according to an embodiment of the disclosure. The video coding device 400 is suitable for implementing the disclosed embodiments as described herein. In an embodiment, the video coding device 400 may be a decoder such as video decoder 30 of FIG. 1A or an encoder such as video encoder 20 of FIG. 1A.

The video coding device 400 comprises ingress ports 410 (or input ports 410) and receiver units (Rx) 420 for receiving data; a processor, logic unit, or central processing unit (CPU) 430 to process the data; transmitter units (Tx) 440 and egress ports 450 (or output ports 450) for transmitting the data; and a memory 460 for storing the data. The video coding device 400 may also comprise optical-to-electrical (OE) components and electrical-to-optical (EO) components coupled to the ingress ports 410, the receiver units 420, the transmitter units 440, and the egress ports 450 for egress or ingress of optical or electrical signals.

The processor 430 is implemented by hardware and software. The processor 430 may be implemented as one or more CPU chips, cores (e.g., as a multi-core processor), FPGAs, ASICs, and DSPs. The processor 430 is in communication with the ingress ports 410, receiver units 420, transmitter units 440, egress ports 450, and memory 460. The processor 430 comprises a coding module 470. The coding module 470 implements the disclosed embodiments described above. For instance, the coding module 470 implements, processes, prepares, or provides the various coding operations. The inclusion of the coding module 470 therefore provides a substantial improvement to the functionality of the video coding device 400 and effects a transformation of the video coding device 400 to a different state. Alternatively, the coding module 470 is implemented as instructions stored in the memory 460 and executed by the processor 430.

The memory 460 may comprise one or more disks, tape drives, and solid-state drives and may be used as an overflow data storage device, to store programs when such programs are selected for execution, and to store instructions and data that are read during program execution. The memory 460 may be, for example, volatile and/or nonvolatile and may be a read-only memory (ROM), random access memory (RAM), ternary content-addressable memory (TCAM), and/or static random-access memory (SRAM).

Fig. 5 is a simplified block diagram of an apparatus 500 that may be used as either or both of the source device 12 and the destination device 14 from Fig. 1 according to an exemplary embodiment.

A processor 502 in the apparatus 500 can be a central processing unit. Alternatively, the processor 502 can be any other type of device, or multiple devices, capable of manipulating or processing information now-existing or hereafter developed. Although the disclosed implementations can be practiced with a single processor as shown, e.g., the processor 502, advantages in speed and efficiency can be achieved using more than one processor.

A memory 504 in the apparatus 500 can be a read only memory (ROM) device or a random access memory (RAM) device in an implementation. Any other suitable type of storage device can be used as the memory 504. The memory 504 can include code and data 506 that is accessed by the processor 502 using a bus 512. The memory 504 can further include an operating system 508 and application programs 510, the application programs 510 including at least one program that permits the processor 502 to perform the methods described here. For example, the application programs 510 can include applications 1 through N, which further include a video coding application that performs the methods described here.

The apparatus 500 can also include one or more output devices, such as a display 518. The display 518 may be, in one example, a touch sensitive display that combines a display with a touch sensitive element that is operable to sense touch inputs. The display 518 can be coupled to the processor 502 via the bus 512.

Although depicted here as a single bus, the bus 512 of the apparatus 500 can be composed of multiple buses. Further, the secondary storage 514 can be directly coupled to the other components of the apparatus 500 or can be accessed via a network and can comprise a single integrated unit such as a memory card or multiple units such as multiple memory cards. The apparatus 500 can thus be implemented in a wide variety of configurations.

Intra prediction

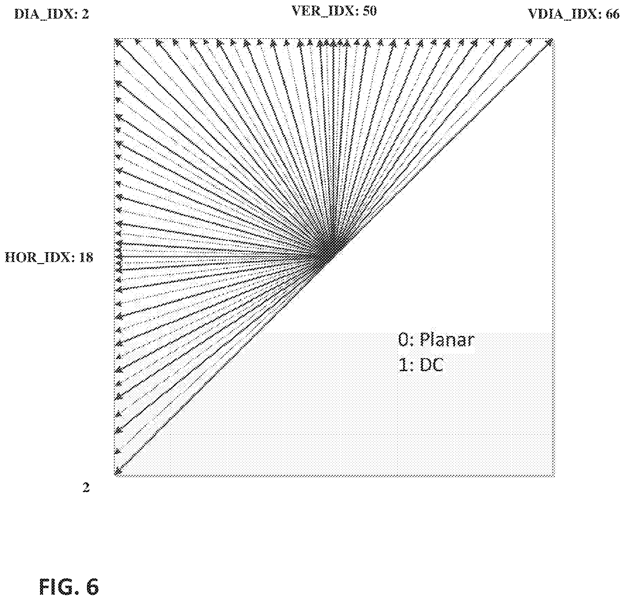

To capture the arbitrary edge directions presented in natural video, the number of directional intra modes in VTM6 is extended from 33, as used in HEVC, to 65. The new directional modes not in HEVC are depicted as dotted arrows in Fig. 6, and the planar and DC modes remain the same. These denser directional intra prediction modes apply for all block sizes and for both luma and chroma intra predictions. Specifically, the values of all intra prediction modes are defined in Table 1:

**Table 1 - Specification of intra prediction mode and associated names**

| Intra prediction mode | Associated name |
|---|---|
| 0 | INTRA_PLANAR |
| 1 | INTRA_DC |
| 2..66 | INTRA_ANGULAR2..INTRA_ANGULAR66 |

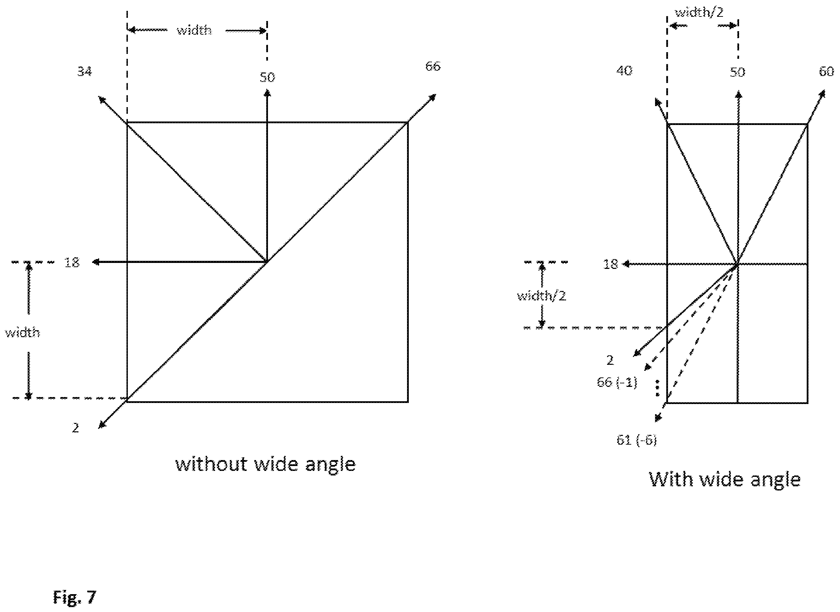

Conventional angular intra prediction directions are defined from 45 degrees to -135 degrees in clockwise direction. In VTM6, several conventional angular intra prediction modes are adaptively replaced with wide-angle intra prediction modes for the non-square blocks. As shown in Fig. 7, when width/height ratio is 1/2, the modes from 61 to 66 is mapped to -6 to -1, respectively. The modes from 61 to 66 will refer to the reference samples from down left side instead of up-right edges.

The mapping rule is defined as the following process, with the input nW as the width of the block, nH as the height of the block, and predModeIntra as the input angle mode:

The variable whratio is set equal to Abs( Log2( nW / nH ) ).

For non-square blocks (nW is not equal to nH), the intra prediction mode predModeIntra is modified as follows:

- If all of the following conditions (these conditions are used to determine whether to apply wide angle mapping process or not) are true, predModeIntra is set equal to ( predModeIntra + 65 ).

  - nW is greater than nH,

  - predModeIntra is greater than or equal to 2,

  - predModeIntra is less than (whRatio > 1) ? ( 8 + 2 * whRatio ) : 8.

- Otherwise, if all of the following conditions (these conditions are used to determine whether to apply wide angle mapping process or not) are true, predModeIntra is set equal to ( predModeIntra - 67 ).

  - nH is greater than nW,

  - predModeIntra is less than or equal to 66,

  - predModeIntra is greater than ( whRatio > 1) ? (60 - 2 * whRatio ) : 60.

Take a block with aspect ratio 1:2 (block width is half of height) as an example, predModeIntra modes 61 to 66 would be mapped to -6 to -1. as it meets the following conditions:

- nH is greater than nW,

- predModeIntra is less than or equal to 66,

- predModeIntra is greater than ( whRatio > 1) ? (60 - 2 * whRatio) : 60, where whRatio = Abs( Log2( nW / nH) ) = 1.

**Angular Intra prediction modes and their corresponding directional interpretation.**

In some examples, each prediction mode predModeIntra would have a corresponding value intraPredAngle, as shown in Table 2.

Table 2 - Specification of intraPredAngle

| predModeIntra | -14 | -13 | -12 | -11 | -10 | -9 | -8 | -7 | -6 | -5 | -4 | -3 | -2 | -1 | 2 | 3 | 4 |
|---|---|---|---|---|---|---|---|---|---|---|---|---|---|---|---|---|---|
| intraPredAngle | 512 | 341 | 256 | 171 | 128 | 102 | 86 | 73 | 64 | 57 | 51 | 45 | 39 | 35 | 32 | 29 | 26 |
| predModeIntra | 5 | 6 | 7 | 8 | 9 | 10 | 11 | 12 | 13 | 14 | 15 | 16 | 17 | 18 | 19 | 20 | 21 |
| intraPredAngle | 23 | 20 | 18 | 16 | 14 | 12 | 10 | 8 | 6 | 4 | 3 | 2 | 1 | 0 | -1 | -2 | -3 |
| predModeIntra | 22 | 23 | 24 | 25 | 26 | 27 | 28 | 29 | 30 | 31 | 32 | 33 | 34 | 35 | 36 | 37 | 38 |
| intraPredAngle | -4 | -6 | -8 | -10 | -12 | -14 | -16 | -18 | -20 | -23 | -26 | -29 | -32 | -29 | -26 | -23 | -20 |
| predModeIntra | 39 | 40 | 41 | 42 | 43 | 44 | 45 | 46 | 47 | 48 | 49 | 50 | 51 | 52 | 53 | 54 | 55 |
| intraPredAngle | -18 | -16 | -14 | -12 | -10 | -8 | -6 | -4 | -3 | -2 | -1 | 0 | 1 | 2 | 3 | 4 | 6 |
| predModeIntra | 56 | 57 | 58 | 59 | 60 | 61 | 62 | 63 | 64 | 65 | 66 | 67 | 68 | 69 | 70 | 71 | 72 |
| intraPredAngle | 8 | 10 | 12 | 14 | 16 | 18 | 20 | 23 | 26 | 29 | 32 | 35 | 39 | 45 | 51 | 57 | 64 |
| predModeIntra | 73 | 74 | 75 | 76 | 77 | 78 | 79 | 80 | | | | | | | | | |
| intraPredAngle | 73 | 86 | 102 | 128 | 171 | 256 | 341 | 512 | | | | | | | | | |

EP 4 082 193 B1

The output value "intraPredAngle" may represents a distance value cooresponds to the intra prediction mode, as shown in Fig. 7. the corresponding degree "α" of mode X between 34 to 50 can be derived as

$$\alpha= \text{arctan}(\ \text{intraPredAngle}\ (X)/32)$$

The vertical mode 50 is considered as the zero degree. Among intra predictions modes that corresponding to a value range from 34 to 80, a mode points to the left of mode 50 is considered as negative degree, a mode points to the right of mode 50 is considered as positive degree. In another example, the horizontal mode 18 is considered as the zero degree. Among intra predictions modes that corresponding to a value range from -14 to 34, a mode points to the up of mode 18 is considered as negative degree, a mode points to the down of mode 18 is considered as positive degree.

The corner Mode might change when the block aspect ratio is changed. For example, for a square block, the cornerMode is 34, where its angle is α= arctan( intraPredAngle (45)/32) = arctan( -32/32), so its tan(α) is 1.

For a non-square block, e.g. with width/height = 1/2, the corner mode is 40, its tan(α) is 1/2.

**Mode dependent intra smoothing (MDIS)**

At the beginning of intra prediction for angular modes, a so called mode dependent intra smoothing process is conducted. It selects different filters based on the intra prediction mode and the size of the current block. The related specification in intra prediction is highlighted as follows in the current VVC draft (i.e. JVET-Q0041-v2, http://phenix.it-sudparis.eu/jvet/doc_end_user/documents/17_Brussels/wg11/JVET-Q0041-v2.zip):
Specification of INTRA_ANGULAR2..INTRA_ANGULAR66 intra prediction modes
Inputs to this process are:

the intra prediction mode predModeIntra,
a variable refIdx specifying the intra prediction reference line index,

- a variable nTbW specifying the transform block width,
- a variable nTbH specifying the transform block height,
- a variable refW specifying the reference samples width,
- a variable refH specifying the reference samples height,
- a variable nCbW specifying the coding block width,
- a variable nCbH specifying the coding block height,
- a variable refFilterFlag specifying the value of reference filter flag,
- a variable cldx specifying the colour component of the current block,
- the neighbouring samples p[ x ][ y ], with x = -1- refIdx, y = -1- refIdx..refH - 1 and x ]= -refIdx..refW - 1, y = -1- refIdx.

Outputs of this process are the predicted samples predSamples[ x ][ y ], with x = 0..nTbW - 1, y = 0..nTbH - 1. The variable nTbS is set equal to ( Log2 ( nTbW ) + Log2 ( nTbH )) >> 1.

The variable filterFlag is derived as follows:
- If one or more of the following conditions is true, filterFlag is set equal to 0:

- refFilterFlag is equal to 1
- refIdx is not equal to 0
- IntraSubPartitionsSplitType is not equal to ISP_NO SPLIT

- Otherwise, the following applies:
- The variable minDistVerHor is set equal to Min( Abs( predModeIntra - 50), Abs( predModeIntra - 18 )).
- The variable intraHorVerDistThres[ nTbS ] is specified in Table 3.
- The variable filterFlag is derived as follows:
- If minDistVerHor is greater than intraHorVerDistThres[ nTbS ], filterFlag is set equal to 1.
- Otherwise, filterFlag is set equal to 0.

*Table 3 - Specification of intraHorVerDistThres[ nTbS ] for various transform block sizes nTbS*

|  | nTbS = 2 | nTbS = 3 | nTbS = 4 | nTbS = 5 | nTbS = 6 | nTbS = 7 |
|---|---|---|---|---|---|---|
| **intraHorVerDistThres[ nTbS ]** | 24 | 14 | 2 | 0 | 0 | 0 |

A variable nTbS is derived based on the current transform block width nTbW and height nTbH. The variable filterFlag is used to decide which interpolation filter shall be used in intra prediction. When filterFlag is 1, a variation of Gaussian filter (fG filter) is used, otherwise, a cubic filter (fC filter) is used. Both filters of fG and fC are 4-tap filters. fC filter is selected when one or more of the following conditions is true:

1. reference sample filter is applied (i.e. refFilterFlag is equal to 1)
2. multiple reference line is used for the current block (i.e. refldx is not equal to 0 )
3. intra sub-partition intra prediction is applied for the current block (i.e. IntraSubPartitionsSplitType is not equal to ISP_NO_SPLIT)

Input refFilterFlag specifies whether the reference samples of the current block are filtered or not. The reference sample filtering is triggered when all of the following conditions are true:

- current coding block is NOT applied with Multiple reference line (MRL) intra prediction
- current coding block is NOT applied with Intra sub-block partition (ISP) based prediction
- the current coding block is a luma coding block
- the size of coding block is greater than 32 luma samples
- the prediction mode (after wide-angle mapping) is one of the mode set {0, -14, -12, -10, -6, 2, 34, 66, 72, 76, 78, 80}

Intra sub-partition (ISP) coding mode is a tool applied for luma intra prediction modes. The applied intra-prediction are divided vertically or horizontally into 2 or 4 sub-partitions, depending on the block size dimensions, as shown in Table 4. Note, vertically the width of sub-prediction-partition is not allowed to be smaller than 4 luma samples. All sub-prediction-partition shared a same intra prediction mode.

Table4: Number of sub-partitions depending on the block size

| Block Size | Number of Sub-Partitions |
| --- | --- |
| $4 \times 4$ | Not divided |
| $4 \times 8$ and $8 \times 4$ | 2 |
| All other cases | 4 |

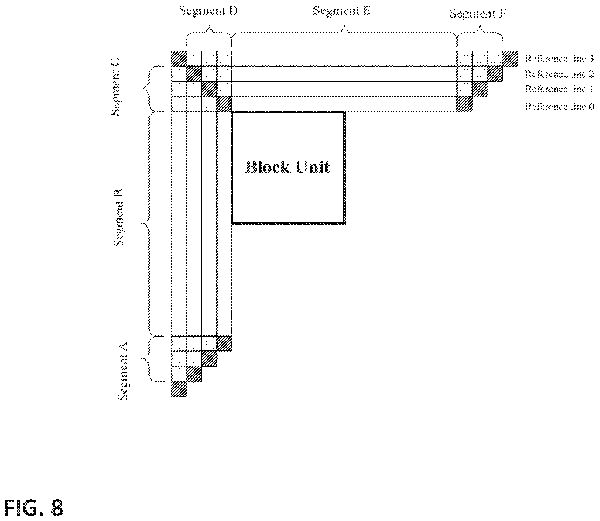

Multiple reference line (MRL) intra prediction uses more reference lines for intra prediction. In Fig. 8, an example of 4 reference lines is depicted, where the samples of segments A and F are not fetched from reconstructed neighbouring samples but padded with the closest samples from Segment B and E, respectively. Conventionally, intra-picture prediction uses the nearest reference line (i.e., reference line 0). In MRL, 2 additional lines (reference line 1 and reference line 3) can be used. In the example of multiple reference line intra prediction showed in Fig. 8, only reference line 0, 1, 3 can be used. When refldx is not equal to 0, MRL is enabled a reference line other the closest reference line is used.

Whether or not applying fG filter is further decided by the size and intra prediction of the current block (i.e. otherwise, the following applies):

1. Derive the mode differences between the current block's intra mode (i.e. predModeIntra) and the horizontal (i.e. value of 18) and vertical (i.e. value of 50) mode, and set the smaller one to the variable minDistVerHor(i.e. variable minDistVerHor is set equal to Min( Abs( predModeIntra - 50), Abs( predModeIntra - 18) )
2. Compare variable minDistVerHor to a pre-defind threshold table as shown in Table 3, according to the derived variable nTbS.

   a) If minDisVerHor is greater than the corresponding threshold (i.e. intraHorVerDistThres[nTbS]), then fG filter is applied.
   b) Otherwise, fC filter is applied.

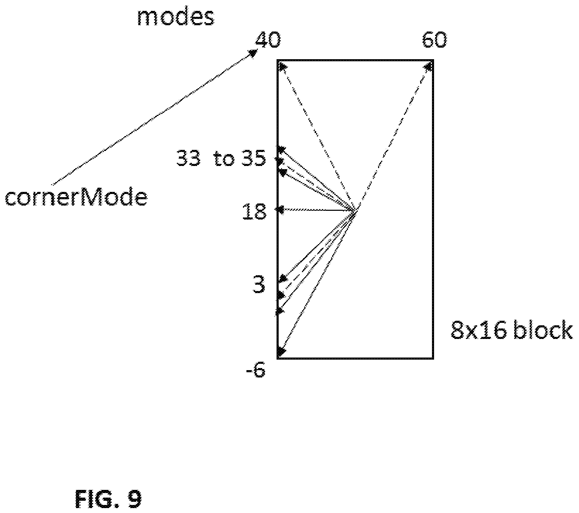

The current MDIS conditions might lead to an asymmetric filtering selection for symmetric intra modes in non-square blocks. Fig. 9 shows an example, with the following assumptions:

- the current block is a luma coding block with 8x16, i.e. nTbW is 8 and nTbH is 16
- The current intra prediction mode is an angular mode, i.e. not Planar nor DC mode
- refldx is equal to 0, i.e. MRL is disabled

- IntraSubPartitionsSplitType is equal to ISP NO _SPLIT, i.e. ISP is disabled.
- refFilterFlag is not equal to 1, i.e. reference sample filtering is not applied.

Therefore, nTbS = (Log2 ( 8 ) + Log2 ( 16 ) ) >> 1 = 3 and intraHorVerDistThres[3] = 14.

For mode X in modes 3, -1 to -5 (in total 6 modes), the following steps would apply:

$\rightarrow$ Min( Abs(X-50 ), Abs( X - 18 ) )
$\rightarrow$ abs(X - 18) > 14
$\rightarrow$ flagFilter is set to 1, and therefore fG is applied.

It is worth noting for mode 2 and -6, the refFilterFlag would be 1 in this case, and thus filterFlag will be 0, i.e. , fC would be applied

In comparison, for the up part of modes predModeIntra from 33 to 40, there are only two modes 33 and 35 would be applied with fG filter:

For mode 33,

$\rightarrow$ Min( Abs( predModeIntra - 50), Abs( predModeIntra - 18 ) )
$\rightarrow$ abs(33 - 18) > 14
$\rightarrow$ flagFilter is set to 1, and therefore fG is applied

For mode 35,

$\rightarrow$ Min( Abs( predModeIntra - 50), Abs( predModeIntra - 18 ) )
$\rightarrow$ abs(35 - 50) > 14
$\rightarrow$ flagFilter is set to 1, and therefore fG is applied

However, the modes 36-39 (which are the symmetric modes of -2 to -5 with horizontal mode 18 as the axis) would use cubic filter because they are closer to mode 50, thus the derived difference is smaller than or equal to the threshold 14.

**Solution**

The mode that is equally close to horizontal and vertical mode is mode 34, i.e. abs(34-50) = abs(34-18) = 16. The mode 34 is a corner mode for square blocks, as shown in Fig. 7 left side. However, when the current block is not square, the corner mode would be changed. For example, for a block with width/height = 1/2, the corner mode becomes 40.

One alternative solution is to derive the difference between the current block's mode and horizontal (or vertical) mode based on the corner mode, which would be changed according to the block aspect ratio.

- When a mode is greater than the corresponding corner mode, then it shall derive the absolute mode difference between the current mode and the vertical mode (i.e. abs(X-50), wherein X is the current block's mode), because the prediction direction of these modes is to the top edge of the current block.
- When a mode is smaller than or equal to the corresponding corner case, then it shall derive the absolute mode difference between the current mode and the horizontal mode (i.e. abs(X-18), wherein X is the current block's mode), because the prediction direction of these modes is to the left edge of the current block.

With the solution, the asymmetric filtering can be avoid. For example, in a block with width/height = 1/2, the following steps would apply when deriving the distance to the horizontal (or vertical) modes:
For predModeIntra X in mode 33, 35-39, inclusive. (**6 modes**)

$\rightarrow$ They are smaller than the corner mode 40
$\rightarrow$ the variable minDistVerHor is derived as abs(X-18)
$\rightarrow$ abs(X - 18) > 14
$\rightarrow$ flagFilter is set to 1, and therefore fG is applied

Therefore, now both up part and bottom part now have 6 modes that is applied with the fG filter and each mode in these 6 modes have a corresponding symmetric mode (i.e. mode 3 $\longleftrightarrow$ 33, -1 $\longleftrightarrow$ 35, -2 $\longleftrightarrow$ 36, -3 $\longleftrightarrow$ 37, - 4 $\longleftrightarrow$ 38, -5 $\longleftrightarrow$ 39).

The solution can be generalized for all blocks with different block aspect ratio. In one example, the spec can be modified as follows, with addition highlighted and deletion:

Specification of INTRA_ANGULAR2..INTRA_ANGULAR66 intra prediction modes

Inputs to this process are:

-    the intra prediction mode predModeIntra,

-    a variable refIdx specifying the intra prediction reference line index,

-    a variable nTbW specifying the transform block width,

-    a variable nTbH specifying the transform block height,

-    a variable refW specifying the reference samples width,

-    a variable refH specifying the reference samples height,

-    a variable nCbW specifying the coding block width,

-    a variable nCbH specifying the coding block height,

-    a variable refFilterFlag specifying the value of reference filter flag,

-    a variable cIdx specifying the colour component of the current block,

-    the neighbouring samples p[ x ][ y ], with x = -1- refIdx, y = -1- refIdx..refH - 1 and x ]= -refIdx..refW - 1, y = -1- refIdx.

Outputs of this process are the predicted samples predSamples[ x ][ y ], with x = 0..nTbW - 1, v = 0..nTbH - 1.

The variable nTbS is set equal to ( Log2 ( nTbW ) + Log2 ( nTbH )) >> 1.

**The variable cornerMode is derived according to Table 5,**

**Table 5: cornerMode under different block aspect ratio**

| Log2(nTbW/nTbH)+4 | 0 | 1 | 2 | 3 | 4 | 5 | 6 | 7 | 8 |
|---|---|---|---|---|---|---|---|---|---|
| cornerMode | 48 | 46 | 44 | 40 | 34 | 28 | 24 | 22 | 20 |

The variable filterFlag is derived as follows:

-    If one or more of the following conditions is true, filterFlag is set equal to 0:

   -    refFilterFlag is equal to 1

   -    refIdx is not equal to 0

   -    IntraSubPartitionsSplitType is not equal to ISP_NO_SPLIT

-    Otherwise, the following applies:

   -    The variable minDistVerHor is set equal to **predModeIntra>cornerMode? Abs( predModeIntra** - **50): Abs( predModeIntra - 18** ).

   where predModeIntra indicates the intra prediction mode of the current block, cornerMode is derived based on the predefined table in Table 5.

The equation represents when the intra mode of the current block is larger than the corner mode, then the variable of mode difference is set to absolute difference between the intra mode of the current block and the vertical mode (i.e. abs(predModeIntra - 50)) ; otherwise, the variable of mode difference is set to absolute difference between the intra mode of the current block and the horizontal mode (i.e. abs(predModeIntra - 50) ).
- The variable intraHorVerDistThres[ nTbS ] is specified in Table 6.
- The variable filterFlag is derived as follows:
- If minDistVerHor is greater than intraHorVerDistThres[ nTbS ], filterFlag is set equal to 1.
- Otherwise, filterFlag is set equal to 0.

*Table 6 - Specification of intraHorVerDistThres[ nTbS] for various transform block sizes nTbS*

|  | nTbS = 2 | nTbS = 3 | nTbS = 4 | nTbS = 5 | nTbS = 6 | nTbS = 7 |
|---|---|---|---|---|---|---|
| intraHorVerDistThres[ nTbS ] | 24 | 14 | 2 | 0 | 0 | 0 |

The Table 5 is designed based on the block aspect ratio. The variable Log2(nTbW/nTbH) ranges from -4 to 4 according to the current specification. Log2(nTbW/nTbH) + 4 its value is non-negative. In particular, when the block is square, the value of Log2(nTbW/nTbH) + 4 is 4, and the corresponding corner mode is 34. In the example of Fig. 9, the value of Log2(nTbW/nTbH) + 4 is 3, i.e. nTbW/nTbH = 1/2, the corresponding corner case is 40. Other cornerMode can be derived in a similar fashion.

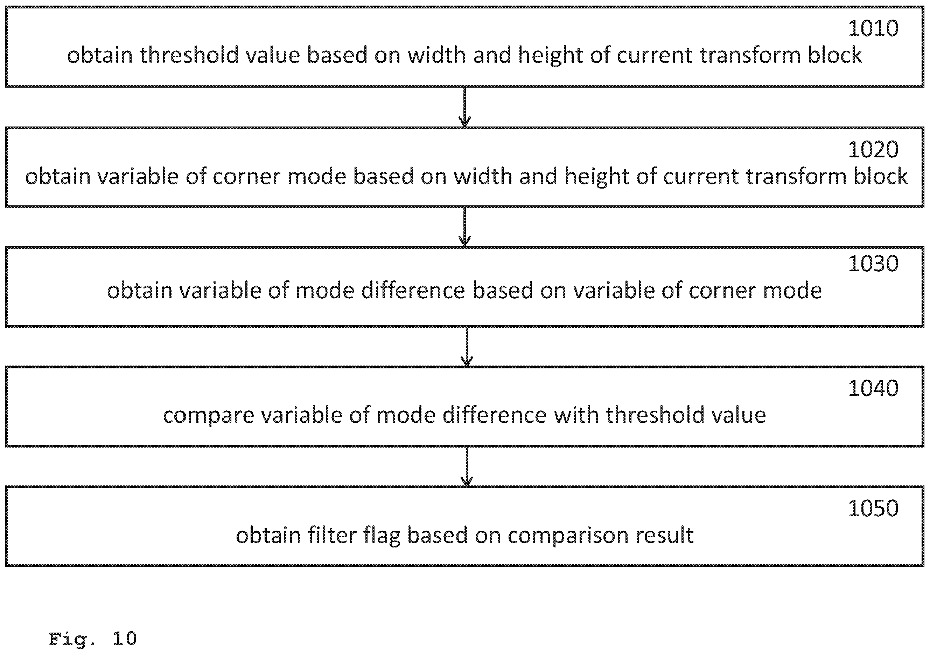

In accordance with the solution it is provided a method of mode dependent (intra smoothing) of a current transform block as it is illustrated in Fig. 10. The method can be part of a method of encoding a video sequence or decoding an encoded video sequence. The method comprises the step of obtaining 1010 a threshold value based on a width of the current transform block and a height of the current transform block. Further, the method comprises obtaining 1020 a variable of corner mode based on the width of the current transform block and the height of the current transform block (and, thus, the aspect ratio of the current transform block).

Subsequently, based on the variable of corner mode that is obtained in step 1020 a variable of mode difference is obtained 1030. The thus obtained variable of mode difference is compared 1040 with the threshold value obtained in step 1010 to obtain a comparison result. Furthermore, the method comprises obtaining 1050 a filter flag based on the comparison result, wherein the filter flag indicates a type of an interpolation filter to be used for the interpolation filtering. By means of the thus specified interpolation filter (for example, a Gaussian or cubic filter) interpolation filtering can be performed.

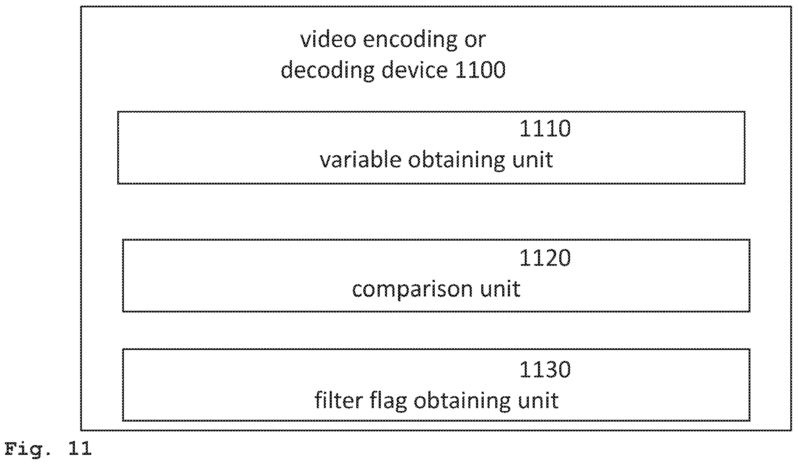

The method illustrated in Fig.10 can be implemented in a coding (i.e, encoding or decoding) device 1100 as it is illustrated in Fig. 11. The encoding or decoding device 1100 comprises a variable obtaining unit 1110 that is configured to obtain a threshold value based on a width of a current transform block and a height of the current transform block. The variable obtaining unit 1110 is, furthermore, configured to obtain a variable of corner mode based on the width of the current transform block and the height of the current transform block.

Moreover, the variable obtaining unit 1110 is configured to obtain a variable of mode difference based on the variable of corner mode. The encoding or decoding device 1100, furthermore, comprises a comparison unit 1120 configured to compare the variable of mode difference provided by the variable obtaining unit 1110 with the threshold value provided by the variable obtaining unit 1110 to obtain a comparison result. A filter flag obtaining unit 1130 is comprised in the encoding or decoding device 1100 configured to obtain a filter flag based on the comparison result provided by the comparison unit 1120, wherein the filter flag indicates a type of an interpolation filter to be used for interpolation filtering of the current transform block.

The encoding or decoding device 1100 further comprises an interpolation filtering unit, not shown in Fig. 11, configured to perform interpolation filtering of the current transform block by means of the interpolation filter indicated by the obtained filter flag.

By the method and device, it can be guaranteed that for non-square blocks the same interpolation filters are used for angular intra prediction modes, more particularly, wide angle intra prediction, that are symmetric with respect to the reference intra prediction mode (for example, a horizontal intra prediction mode, or a vertical intra prediction mode). Thereby, intra smoothing caused by the application of the interpolation filter increases the resulting quality of the decoded and displayed picture as compared to the art. Particularly, simulation test runs have proven that performance gain may be obtained by the symmetric interpolation filtering.

Mathematical Operators

The mathematical operators used in this application are similar to those used in the C programming language. However, the results of integer division and arithmetic shift operations are defined more precisely, and additional operations are defined, such as exponentiation and real-valued division. Numbering and counting conventions generally begin from 0, e.g., "the first" is equivalent to the 0-th, "the second" is equivalent to the 1-th, etc.

Arithmetic operators

The following arithmetic operators are defined as follows:

+      Addition

-      Subtraction (as a two-argument operator) or negation (as a unary prefix operator)

*      Multiplication, including matrix multiplication

$x^y$      Exponentiation. Specifies x to the power of y. In other contexts, such notation is used for superscripting not intended for interpretation as exponentiation.

/      Integer division with truncation of the result toward zero. For example, 7 / 4 and -7 / -4 are truncated to 1 and -7 / 4 and 7 / -4 are truncated to -1.

÷      Used to denote division in mathematical equations where no truncation or rounding is intended.

$\dfrac{x}{y}$      Used to denote division in mathematical equations where no truncation or rounding is intended.

$$\sum_{i=x}^{y} f(i)$$
     The summation of f( i ) with i taking all integer values from x up to and including y. Modulus. Remainder of x divided by defined only for integers x and with x >= 0 and > 0.

x%y      y, y y

Logical operators

The following logical operators are defined as follows:

x && y      Boolean logical "and" of x and y

x || y      Boolean logical "or" of x and y

!      Boolean logical "not"

x ? y : z      If x is TRUE or not equal to 0, evaluates to the value of y; otherwise, evaluates to the value of z.

Relational operators

The following relational operators are defined as follows:

>      Greater than

>=      Greater than or equal to

<      Less than

<=      Less than or equal to

= =      Equal to

!=      Not equal to

When a relational operator is applied to a syntax element or variable that has been assigned the value "na" (not applicable), the value "na" is treated as a distinct value for the syntax element or variable. The value "na" is considered not to be equal to any other value.

Bit-wise operators

The following bit-wise operators are defined as follows:

&      Bit-wise "and". When operating on integer arguments, operates on a two's complement representation of the integer value. When operating on a binary argument that contains fewer bits than another argument, the shorter argument is extended by adding more significant bits equal to 0.

|      Bit-wise "or". When operating on integer arguments, operates on a two's complement representation of the integer value. When operating on a binary argument that contains fewer bits than another argument, the shorter argument is extended by adding more significant bits equal to 0.

^      Bit-wise "exclusive or". When operating on integer arguments, operates on a two's complement representation of the integer value. When operating on a binary argument that contains fewer bits than another argument, the shorter argument is extended by adding more significant bits equal to 0.

x >> y    Arithmetic right shift of a two's complement integer representation of x by y binary digits. This function is defined only for non-negative integer values of y. Bits shifted into the most significant bits (MSBs) as a result of the right shift have a value equal to the MSB of x prior to the shift operation.

x << y    Arithmetic left shift of a two's complement integer representation of x by y binary digits. This function is defined only for non-negative integer values of y. Bits shifted into the least significant bits (LSBs) as a result of the left shift have a value equal to 0.

Assignment operators

The following arithmetic operators are defined as follows:

=    Assignment operator

+ +    Increment, i.e., x+ + is equivalent to x = x + 1; when used in an array index, evaluates to the value of the variable prior to the increment operation.

- -    Decrement, i.e., x- - is equivalent to x = x - 1; when used in an array index, evaluates to the value of the variable prior to the decrement operation.

+=    Increment by amount specified, i.e., x += 3 is equivalent to x = x + 3, and x += (-3) is equivalent to x = x + (-3).

-=    Decrement by amount specified, i.e., x -= 3 is equivalent to x = x - 3, and x -= (-3) is equivalent to x = x - (-3).

Range notation

The following notation is used to specify a range of values:

x = y..z x takes on integer values starting from y to z, inclusive, with x, y, and z being integer numbers and z being greater than y.

Mathematical functions

The following mathematical functions are defined:

$$\text{Abs}(\,x\,) = \begin{cases} x & ; & x >= 0 \\ -x & ; & x < 0 \end{cases}$$

Asin( x )    the trigonometric inverse sine function, operating on an argument x that is in the range of -1.0 to 1.0, inclusive, with an output value in the range of $-\pi \div 2$ to $\pi \div 2$, inclusive, in units of radians

Atan( x )    the trigonometric inverse tangent function, operating on an argument x, with an output value in the range of $-\pi \div 2$ to $\pi \div 2$, inclusive, in units of radians

$$\text{Atan2}(\,y,\,x\,) = \begin{cases} \text{Atan}\left(\frac{y}{x}\right) & ; & x > 0 \\ \text{Atan}\left(\frac{y}{x}\right) + \pi & ; & x < 0 \ \&\& \ y >= 0 \\ \text{Atan}\left(\frac{y}{x}\right) - \pi & ; & x < 0 \ \&\& \ y < 0 \\ +\frac{\pi}{2} & ; & x == 0 \ \&\& \ y >= 0 \\ -\frac{\pi}{2} & ; & \text{otherwise} \end{cases}$$

Ceil( x ) the smallest integer greater than or equal to x.

$$\text{Clip1}_Y(\,x\,) = \text{Clip3}(\,0,\,(\,1 \ << \ \text{BitDepth}_Y\,) - 1,\,x\,)$$

$$\text{Clip1}_C(\,x\,) = \text{Clip3}(\,0,\,(\,1 \ << \ \text{BitDepth}_C\,) - 1,\,x\,)$$

$$Clip3(\,x, y, z\,) = \begin{cases} x & ; & z < x \\ y & ; & z > y \\ z & ; & \text{otherwise} \end{cases}$$

Cos( x ) the trigonometric cosine function operating on an argument x in units of radians.

Floor( x ) the largest integer less than or equal to x.

$$GetCurrMsb(\,a, b, c, d\,) = \begin{cases} c + d & ; & b - a >= d\,/\,2 \\ c - d & ; & a - b > d\,/\,2 \\ c & ; & \text{otherwise} \end{cases}$$

Ln( x ) the natural logarithm of x (the base-e logarithm, where e is the natural logarithm base constant 2.718 281 828...).

Log2( x ) the base-2 logarithm of x.

Log10( x ) the base-10 logarithm of x.

$$Min(\,x, y\,) = \begin{cases} x & ; & x <= y \\ y & ; & x > y \end{cases}$$

$$Max(\,x, y\,) = \begin{cases} x & ; & x >= y \\ y & ; & x < y \end{cases}$$

$$Round(\,x\,) = Sign(\,x\,) * Floor(\,Abs(\,x\,) + 0.5\,)$$

$$Sign(\,x\,) = \begin{cases} 1 & ; & x > 0 \\ 0 & ; & x == 0 \\ -1 & ; & x < 0 \end{cases}$$

Sin( x ) the trigonometric sine function operating on an argument x in units of radians

$$Sqrt(\,x\,) = \sqrt{x}$$

$$Swap(\,x, y\,) = (\,y, x\,)$$

Tan( x ) the trigonometric tangent function operating on an argument x in units of radians

Order of operation precedence

When an order of precedence in an expression is not indicated explicitly by use of parentheses, the following rules apply:

-  Operations of a higher precedence are evaluated before any operation of a lower precedence.

-  Operations of the same precedence are evaluated sequentially from left to right.

The table below specifies the precedence of operations from highest to lowest; a higher position in the table indicates a higher precedence.

For those operators that are also used in the C programming language, the order of precedence used in this Specification is the same as used in the C programming language.

Table: Operation precedence from highest (at top of table) to lowest (at bottom of table)

| operations (with operands x, y, and z) |
| --- |
| "x++", "x- -" |
| "!x", "-x" (as a unary prefix operator) |
| $x^y$ |
| "x * y", "x / y", "x ÷ y" " $\frac{x}{y}$ " "x % y" |
| "x + y", "x - y" (as a two-argument operator), " $\sum\limits_{i=x}^{y} f(i)$ " |
| "x << y", "x >> y" |
| "x < y", "x <= y", "x > y", "x >= y" |
| "x = = y", "x != y" |
| "x & y" |
| "x \| y" |
| "x && y" |
| "x \|\| y" |
| "x?y : z" |
| "x..y" |
| "x = y", "x += y", "x -= y" |

Text description of logical operations

In the text, a statement of logical operations as would be described mathematically in the following form:

```
if( condition 0 )
   statement 0
else if( condition 1 )
   statement 1
...
else /* informative remark on remaining condition */
   statement n
```

may be described in the following manner: ... as follows / ... the following applies:

- If condition 0, statement 0
- Otherwise, if condition 1, statement 1
- ...
- Otherwise (informative remark on remaining condition), statement n

Each "If ... Otherwise, if ... Otherwise, ..." statement in the text is introduced with "... as follows" or "... the following applies" immediately followed by "If ... ". The last condition of the "If ... Otherwise, if ... Otherwise,..." is always an "Otherwise, ...". Interleaved "If ... Otherwise, if ... Otherwise, ..." statements can be identified by matching "... as follows" or "... the following applies" with the ending "Otherwise,...".

In the text, a statement of logical operations as would be described mathematically in the following form:

```
if( condition 0a && condition 0b )
   statement 0
else if( condition 1a | | condition 1b )
```

```
    statement 1
...
    else
       statement n
```

may be described in the following manner: ... as follows / ... the following applies:

- If all of the following conditions are true, statement 0:

  - condition 0a

  - condition 0b

  - Otherwise, if one or more of the following conditions are true, statement 1:

    - condition 1a

    - condition 1b

  - Otherwise, statement n

In the text, a statement of logical operations as would be described mathematically in the following form:

```
if( condition 0)
statement 0
if( condition 1) statement 1
```

may be described in the following manner:

```
When condition 0, statement 0
When condition 1, statement 1
```

Although embodiments of the invention have been primarily described based on video coding, it should be noted that embodiments of the coding system 10, encoder 20 and decoder 30 (and correspondingly the system 10) and the other embodiments described herein may also be configured for still picture processing or coding, i.e. the processing or coding of an individual picture independent of any preceding or consecutive picture as in video coding. In general only inter-prediction units 244 (encoder) and 344 (decoder) may not be available in case the picture processing coding is limited to a single picture 17. All other functionalities (also referred to as tools or technologies) of the video encoder 20 and video decoder 30 may equally be used for still picture processing, e.g. residual calculation 204/304, transform 206, quantization 208, inverse quantization 210/310, (inverse) transform 212/312, partitioning 262/362, intra-prediction 254/354, and/or loop filtering 220, 320, and entropy coding 270 and entropy decoding 304.

Embodiments, e.g. of the encoder 20 and the decoder 30, and functions described herein, e.g. with reference to the encoder 20 and the decoder 30, may be implemented in hardware, software, firmware, or any combination thereof. If implemented in software, the functions may be stored on a computer-readable medium or transmitted over communication media as one or more instructions or code and executed by a hardware-based processing unit. Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

By way of example, and not limiting, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

Instructions may be executed by one or more processors, such as one or more digital signal processors (DSPs), general purpose microprocessors, application specific integrated circuits (ASICs), field programmable logic arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, the functionality described herein may be provided within dedicated hardware and/or software modules configured for encoding and decoding, or incorporated in a combined codec. Also, the techniques could be fully implemented in one or more circuits or logic elements.

The techniques of this disclosure may be implemented in a wide variety of devices or apparatuses, including a wireless handset, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a codec hardware unit or provided by a collection of interoperative hardware units, including one or more processors as described above, in conjunction with suitable software and/or firmware.

**Claims**

1. A method of mode dependent interpolation filtering of a current transform block carried out by a video encoder or video decoder, wherein the method comprises:

    obtaining (1010) a threshold value based on a width of the current transform block and a height of the current transform block;
    obtaining (1020) a variable of corner mode based on the width of the current transform block and the height of the current transform block;
    obtaining (1030) a variable of mode difference based on the variable of corner mode;
    comparing (1040) the variable of mode difference with the threshold value to obtain a comparison result;
    obtaining (1050) a filter flag based on the comparison result, wherein the filter flag indicates a type of an interpolation filter to be used for the interpolation filtering; and
    performing interpolation filtering of the current transform block by means of the interpolation filter indicated by the obtained filter flag;
    and **characterized in that**
    the variable of corner mode is obtained based on Log2(nTbW/nTbH) and an offset value, wherein nTbW and nTbH represent the width and height of the current transform block, respectively;
    the variable of mode difference is set equal to:

    predModeIntra>cornerMode?Abs( predModeIntra - value of vertical mode): Abs( predModeIntra - value of horizontal mode), wherein cornerMode represents the variable of corner mode, and predModeIntra represents an intra prediction mode of the current transform block;
    the threshold value, intraHorVerDistThres, is obtained by:

| | nTbS = 2 | nTbS = 3 | nTbS = 4 | nTbS = 5 | nTbS = 6 | nTbS = 7 |
|---|---|---|---|---|---|---|
| intraHorVerDistThres[ nTbS ] | 24 | 14 | 2 | 0 | 0 | 0 |

    wherein the variable nTbS is set equal to ( Log2 (nTbW) + Log2 (nTbH ) ) >> 1, and nTbW and nTbH represent the width and height of the current transform block, respectively;
    the filter flag is obtained as follows:

    if minDistVerHor is greater than intraHorVerDistThres[nTbS], filterFlag is set equal to 1;

otherwise, filterFlag is set equal to 0;

wherein minDistVerHor represents the variable of mode difference, and filterFlag represents the filter flag; and

the obtained filter flag indicates a Gaussian interpolation filter to be used for the interpolation filtering when the variable of mode difference is greater than the threshold value and indicates a cubic interpolation filter to be used for the interpolation filtering when the variable of mode difference is smaller than or equal to the threshold value.

2. The method of claim 1, wherein the offset value is 4 and the variable of corner mode, cornerMode, is obtained by:

| Log2(nTbW/nTbH)+4 | 0 | 1 | 2 | 3 | 4 | 5 | 6 | 7 | 8 |
|---|---|---|---|---|---|---|---|---|---|
| cornerMode | 48 | 46 | 44 | 40 | 34 | 28 | 24 | 22 | 20 |

3. The method of claim 1 or 2, wherein Log2(nTbW/nTbH) + 4 is non-negative.

4. The method of any one of claims 1-3, wherein when the current transform block is a square block, the corresponding corner mode is 34.

5. The method of any one of claims 1-4, wherein when nTbW/nTbH = 1/2, the corresponding corner mode is 40.

6. The method of claim 1-5, wherein the value of vertical mode is 50 and the value of horizontal mode is 18.

7. An encoder (20) or a decoder (30) comprising processing circuitry for carrying out the method according to any one of claims 1 to 6.

8. A computer program product comprising a program code for performing the method according to any one of claims 1 to 6.


**Patentansprüche**

1. Verfahren zur modusabhängigen Interpolationsfilterung eines aktuellen Transformationsblocks, das von einem Video-Kodierer oder Video-Dekodierer durchgeführt wird, wobei das Verfahren Folgendes umfasst:

Erlangen (1010) eines Schwellenwerts basierend auf einer Breite des aktuellen Transformationsblocks und einer Höhe des aktuellen Transformationsblocks;
Erlangen (1020) einer Variable des Eckmodus basierend auf der Breite des aktuellen Transformationsblocks und der Höhe des aktuellen Transformationsblocks;
Erlangen (1030) einer Variablen der Modusdifferenz basierend auf der Variable des Eckmodus;
Vergleichen (1040) der Variablen der Modusdifferenz mit dem Schwellenwert, um ein Vergleichsergebnis zu erlangen;
Erlangen (1050) eines Filterflags basierend auf dem Vergleichsergebnis, wobei das Filterflag einen Typ eines Interpolationsfilters angibt, der für die Interpolationsfilterung verwendet werden soll; und
Durchführen einer Interpolationsfilterung des aktuellen Transformationsblocks mittels des durch das erhaltene Filterflag angegebenen Interpolationsfilters;
**dadurch gekennzeichnet, dass**
die Variable des Eckmodus basierend auf Log2(nTbW/nTbH) und einem Offsetwert erlangt wird, wobei nTbW und nTbH die Breite bzw. Höhe des aktuellen Transformationsblocks darstellen;
die Variable der Modusdifferenz gleich gesetzt wird zu:

predModeIntra>cornerMode?Abs (predModeIntra - Wert des vertikalen Modus): Abs (predModeIntra - Wert des horizontalen Modus), wobei cornerMode die Variable des Eckmodus darstellt und predModeIntra einen Intra-Vorhersagemodus des aktuellen Transformationsblocks darstellt;
wobei der Schwellenwert intraHorVerDistThres wie folgt erlangt wird:

|  | nTbS = 2 | nTbS = 3 | nTbS = 4 | nTbS = 5 | nTbS = 6 | nTbS = 7 |
|---|---|---|---|---|---|---|
| intraHorVerDistThres[ nTbS ] | 24 | 14 | 2 | 0 | 0 | 0 |

wobei die Variable nTbS gleich (Log2 (nTbW) + Log2 (nTbH)) >> 1 gesetzt ist und nTbW und nTbH die Breite bzw. Höhe des aktuellen Transformationsblocks darstellen;
wobei das Filterflag wird wie folgt erlangt wird:

wenn minDistVerHor größer als intraHorVerDistThres[nTbS] ist, das filterFlag auf 1 gesetzt wird;
andernfalls das filterFlag auf 0 gesetzt wird;
wobei minDistVerHor die Variable der Modusdifferenz darstellt und filterFlag das Filterflag darstellt; und
das erlangte Filterflag einen Gaußschen Interpolationsfilter angibt, der für die Interpolationsfilterung verwendet werden soll, wenn die Variable der Modendifferenz größer als der Schwellenwert ist, und einen kubischen Interpolationsfilter angibt, der für die Interpolationsfilterung verwendet werden soll, wenn die Variable der Modendifferenz kleiner oder gleich dem Schwellenwert ist.

2. Verfahren nach Anspruch 1, wobei der Offsetwert 4 ist und die Variable des Eckmodus, CornerMode, erhalten wird durch:

| Log2 (nTbW/nTbH) +4 | 0 | 1 | 2 | 3 | 4 | 5 | 6 | 7 | 8 |
|---|---|---|---|---|---|---|---|---|---|
| cornerMode | 48 | 46 | 44 | 40 | 34 | 28 | 24 | 22 | 20 |

3. Verfahren nach Anspruch 1 oder 2, wobei Log2(nTbW/nTbH) + 4 nicht negativ ist.

4. Verfahren nach einem der Ansprüche 1-3, wobei, wenn der aktuelle Transformationsblock ein quadratischer Block ist, der entsprechende Eckmodus 34 ist.

5. Verfahren nach einem der Ansprüche 1-4, wobei bei nTbW/nTbH = 1/2 der entsprechende Eckmodus 40 ist.

6. Verfahren nach Anspruch 1-5, wobei der Wert des vertikalen Modus 50 und der Wert des horizontalen Modus 18 beträgt.

7. Kodierer (20) oder Dekodierer (30), umfassend eine Verarbeitungsschaltung zum Ausführen des Verfahrens nach einem der Ansprüche 1 bis 6.

8. Computerprogrammprodukt, umfassend einen Programmcode zum Durchführen des Verfahrens nach einem der Ansprüche 1 bis 6.

**Revendications**

1. Procédé de filtrage d'interpolation dépendant de mode d'un bloc de transformation de courant réalisé par un codeur vidéo ou un décodeur vidéo, dans lequel le procédé comprend :

l'obtention (1010) d'une valeur seuil basée sur une largeur du bloc de transformation de courant et une hauteur du bloc de transformation de courant ;
l'obtention (1020) d'une variable de mode de coin basée sur la largeur du bloc de transformation de courant et la hauteur du bloc de transformation de courant ;
l'obtention (1030) d'une variable de différence de mode basée sur la variable de mode de coin ;
la comparaison (1040) de la variable de différence de mode avec la valeur seuil pour obtenir un résultat de comparaison ;
l'obtention (1050) d'un indicateur de filtre basé sur le résultat de comparaison, dans lequel l'indicateur de filtre indique un type de filtre d'interpolation à utiliser pour le filtrage d'interpolation ; et

la réalisation d'un filtrage d'interpolation du bloc de transformation de courant au moyen du filtre d'interpolation indiqué par l'indicateur de filtre obtenu ;
et **caractérisé en ce que**
la variable de mode de coin est obtenue sur la base de Log2(nTbW/nTbH) et d'une valeur de décalage, dans lequel nTbW et nTbH représentent respectivement la largeur et la hauteur du bloc de transformation de courant ;
la variable de différence de mode est définie sur :

predModeIntra>cornerMode?Abs(predModeIntra - valeur de mode vertical): Abs(predModeIntra - valeur de mode horizontal), où cornerMode représente la variable de mode de coin, et predModeIntra représente un mode de prédiction intra du bloc de transformation de courant ;
la valeur seuil, intraHorVerDistThres, est obtenue par :

|  | nTbS = 2 | nTbS = 3 | nTbS = 4 | nTbS = 5 | nTbS = 6 | nTbS = 7 |
|---|---|---|---|---|---|---|
| intraHorVerDistThres[ nTbS ] | 24 | 14 | 2 | 0 | 0 | 0 |

où la variable nTbS est définie sur (Log2 (nTbW) + Log2(nTbH)) >> 1, et nTbW et nTbH représentent respectivement la largeur et la hauteur du bloc de transformation de courant ;

l'indicateur de filtre est obtenu comme suit :

si minDistVerHor est supérieur à intraHorVerDistThres[nTbS], filterFlag est défini sur 1 ;
sinon, filterFlag est défini sur 0 ;
où minDistVerHor représente la variable de différence de mode et filterFlag représente l'indicateur de filtre ; et
l'indicateur de filtre obtenu indique un filtre d'interpolation gaussien à utiliser pour le filtrage d'interpolation lorsque la variable de différence de mode est supérieure à la valeur seuil et indique un filtre d'interpolation cubique à utiliser pour le filtrage d'interpolation lorsque la variable de différence de mode est inférieure à ou égale à la valeur seuil.

2. Procédé selon la revendication 1, dans lequel la valeur de décalage est 4 et la variable de mode de coin, cornerMode, est obtenue par :

| Log2 (nTbW/nTbH) +4 | 0 | 1 | 2 | 3 | 4 | 5 | 6 | 7 | 8 |
|---|---|---|---|---|---|---|---|---|---|
| cornerMode | 48 | 46 | 44 | 40 | 34 | 28 | 24 | 22 | 20 |

3. Procédé selon la revendication 1 ou 2, dans lequel Log2(nTbW/nTbH) + 4 est non négatif.

4. Procédé selon l'une quelconque des revendications 1 à 3, dans lequel lorsque le bloc de transformation de courant est un bloc carré, le mode de coin correspondant est 34.

5. Procédé selon l'une quelconque des revendications 1 à 4, dans lequel lorsque nTbW/nTbH = 1/2, le mode de coin correspondant est 40.

6. Procédé selon les revendications 1 à 5, dans lequel la valeur de mode vertical est de 50 et la valeur de mode horizontal est de 18.

7. Codeur (20) ou décodeur (30) comprenant des circuits de traitement pour exécuter le procédé selon l'une quelconque des revendications 1 à 6.

8. Produit de programme informatique comprenant un code de programme pour mettre en oeuvre le procédé selon l'une quelconque des revendications 1 à 6.

Fig. 1A

Source device 12
- Picture source 16
- Pre-processor 18
- Encoder 20
- Communication interface 22

picture data 17
pre-processed picture data 19
encoded picture data 21

Destination device 14
- Display device 34
- Post-processor 32
- Decoder 30
- Communication interface 28

post-processed picture data 33
decoded picture data 31
encoded picture data 21

communication channel 13

10

Fig. 1B

Video Coding System 40

Antenna 42

Imaging Device(s) 41

processing Circuitry 46

Video Encoder 20

Video Decoder 30

processor(s) 43

Memory Store(s) 44

Display Device 45

Encoder 20

picture 17

input 201

picture block 203

residual calculation unit 204

residual block 205

Transform processing unit 206

transform coefficients 207

Quantization unit 208

quantized coefficients 209

Entropy Encoding unit 270

output 272

encoded picture data 21

Inverse Quantization unit 210

dequantized coefficients 211

Inverse Transform processing unit 212

Reconstructed residual block 213

reconstruction unit 214

reconstructed block 215

prediction block 265

Syntax elements 266

Mode selection unit 260

Partitioning unit 262

Inter Prediction unit 244

Intra Prediction unit 254

Loop Filter 220

filtered block 221

Decoded Picture Buffer 230

decoded picture 231

Fig. 2

**Fig. 3**

Fig. 4

EP 4 082 193 B1

EP 4 082 193 B1

500

502

PROCESSOR

518

DISPLAY

512

| DATA | — 506 |
| APPLICATION:1... |  |
| APPLICATION:VIDEO CODING |  |
| APPLICATION:...N |  |
| OPERATING SYSTEM | — 508 |

510

504

Fig. 5

FIG. 6

without wide angle

With wide angle

Fig. 7

FIG. 8

**FIG. 9**

EP 4 082 193 B1

| 1010 |
| :--- |
| obtain threshold value based on width and height of current transform block |

↓

| 1020 |
| :--- |
| obtain variable of corner mode based on width and height of current transform block |

↓

| 1030 |
| :--- |
| obtain variable of mode difference based on variable of corner mode |

↓

| 1040 |
| :--- |
| compare variable of mode difference with threshold value |

↓

| 1050 |
| :--- |
| obtain filter flag based on comparison result |

Fig. 10

video encoding or
decoding device 1100

1110
variable obtaining unit

1120
comparison unit

1130
filter flag obtaining unit

Fig. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BENJAMIN BROSS et al.** Versatile Video Coding (Draft 7). *JVET MEETING; 20191001 - 20191011; GENEVA; (THE JOINT VIDEO EXPLORATION TEAM OF ISO/IEC JTC1/SC29/WG11 AND ITU-T SG.16),* 01 October 2019, vol. 16 (JVET-P2001-vE), 1-489, http://phenix.in-tevry.fr/jvet/doc_end_user/documents/16_Geneva/wg11/JVET-P2001-v14.zip